# EUROPÄISCHE PATENTSCHRIFT

(11) **EP 0 747 413 B1**
(45) Veröffentlichungstag und Bekanntmachung des Hinweises auf die Patenterteilung: **12.01.2000**
(21) Anmeldenummer: 96108730.1
(22) Anmeldetag: 31.05.1996
(51) Int. Cl.: C08G 59/06, C08L 63/00, C08J 3/03

(54) **Selbstemulgierende wässrige Epoxidharzdispersionen**
Self-emulsifying aqueous epoxy resin dispersions
Dispersions aqueuses auto-émulsifiables à base de résines époxydes

(30) Priorität: 08.06.1995 DE 19520854
(43) Veröffentlichungstag der Anmeldung: 11.12.1996
(73) Patentinhaber: HOECHST AKTIENGESELLSCHAFT, 65926 Frankfurt am Main (DE)
(72) Erfinder: Pfeil, Armin, Dr., 86916 Kaufering (DE); Dreischhoff, Dieter, 65203 Wiesbaden (DE); Godau, Claus, 65399 Kiedrich (DE)
(74) Vertreter: Zounek, Nikolai, Dipl.-Ing.

(56) Entgegenhaltungen:
- EP-A- 0 272 595
- EP-A- 0 346 742
- EP-A- 0 353 103
- EP-A- 0 530 602
- EP-A- 0 639 593
- DE-A- 4 405 148
- US-A- 5 500 461

## Beschreibung

Es ist bekannt, stabile, wäßrige Dispersionen von Kunstharzen dadurch herzustellen, daß man entsprechende Monomere oder Oligomere unter Verwendung geeigneter Hilfsmittel (Emulgatoren) in einem wäßrigen Medium emulgiert und anschließend eine Polyreaktion durchführt. Auf diese Weise lassen sich zum Beispiel wäßrige Dispersionen von Acrylatharzen durch Emulsionspolymerisation darstellen. Bei Kondensaten wie Epoxidharzen, die durch Emulsionskondensation schwierig oder gar nicht herstellbar sind, muß man wäßrige Dispersionen jedoch dadurch herstellen, daß man zuerst das Harz synthetisiert und dann in Wasser dispergiert. Solche Sekundärdispersionen erfordern größere Emulgatormengen, setzen scnon innerhalb kurzer Zeit ab und zeigen allgemein auch schlechte filmbildende Eigenschaften.

In der EP-A 0 051 483 werden Epoxidharz-Dispersionen aus selbstemulgierenden Epoxidharzen beansprucht, die Polyalkylenglykol-Glycidyläther und gegebenenfalls noch ein Monoepoxid als reaktiven Verdünner enthalten. Als maximale Teilchengröße werden ca. 3 µm angegeben. Filme, die aus diesen Dispersionen und geeigneten Härtungsmitteln hergestellt werden, weisen durch den Gehalt an den relativ reaktionsträgen Polyalkylenglykol-Glycidyläthern und gegebenenfalls Monoepoxiden, die als Kettenabbrecher wirken, eine verhältnismäßig weiche Oberfläche auf, die die Verwendbarkeit der beschriebenen Epoxid-Dispersionen einschränkt.

In der US-A 4,423,201 wird die Herstellung selbstemulgierender Epoxidharze aus Diglycidyläthern aromatischer Polyole, aromatischen Polyolen und Umsetzungsprodukten von langkettigen, aliphatischen Polyätherglykolen mit Diisocyanaten und aromatischen Polyolen beschrieben. Die Dispergierung dieser Harze in Wasser ist jedoch nur unter Zuhilfenahme größerer Mengen organischer Lösemittel möglich, auch sind die erzielten Teilchengrößen verhältnismäßig hoch. Die mit diesen Epoxidharz-Dispersionen gefertigten Beschichtungen sind zudem relativ weich.

In der Patentschrift EP-B 0 272 595 sind bereits wäßrige Dispersionen auf Basis spezieller selbstemulgierender Epoxidharze vorgeschlagen worden, die gute Lagerstabilität bei gleichzeitig geringem Gehalt an organischen Lösemitteln aufweisen und Überzüge mit guten Oberflächeneigenschaften ergeben. Die mit diesen Dispersionen hergestellten Beschichtungen neigen jedoch nach längerer Zeit zur Versprödung, wodurch technologische Eigenschaften, wie zum Beispiel die Elastizität oder die Korrosionsschutzwirkung, negativ beeinflußt werden.

In der EP-A 0 530 602 werden verbesserte Varianten (auf Basis flexibilisierter Epoxidharze) von System 1 beschrieben, welche sich hervorragend für wäßrige Korrosionsschutzbeschichtungen eignen und fast oder sogar ganz ohne Lösemittel hergestellt werden können. Nachteil dieser Dispersionen ist ihre geringe Scherstabilität, da es sich um fremdemulgierte Systeme handelt.

Für beide vorgenannten Systeme wird ein spezieller Emulgator durch Kondensation eines aliphatischen Polyols mit einer zahlenmittleren molaren Masse Mₙ von 200 bis 20000 g/mol mit einer Epoxidverbindung mit mindestens zwei Epoxidgruppen pro Molekül und einem Epoxidgruppengehalt von 10 000 bis 500 mmol/kg ("Epoxidäquivalentgewicht" EV von 100 bis 2000 g/mol) gewonnen, wobei das Verhältnis der Anzahl der OH-Gruppen zu Anzahl der Epoxidgruppen 1 : 0,85 bis 1 : 3,5 ist und der Epoxidgruppengehalt dieses Kondensationsproduktes zwischen 200 und 2,5 mmol/kg (EV 5000 bis 400 000 g/mol) liegt. Die Synthese dieser Produkte erfordert eine sorgfältige Reaktionskontrolle sowie reaktive Katalysatoren, deren Rückstände in der wäßrigen Dispersion verbleiben und deren Langzeitlagerstabilität beeinträchtigen können.

Dieser Emulgator liegt im ersten Fall schon während der Harzsynthese vor und wird offensichtlich zu einem gewissen Anteil über die reaktionsträgen sekundären OH-Gruppen in das Epoxidharz eingebaut - man kann also von einem selbstemulgierenden System sprechen. Im zweiten Fall wird der Emulgator nach erfolgter Harzsynthese zugemischt, d.h. es handelt sich um ein fremdemulgiertes System. Dieser Unterschied macht sich vor allem in der Scherstabilität bemerkbar, welche für das zweite System deutlich schwächer ist als für das erste. In beiden Fällen machen sich jedoch die Vorteile der nichtionischen Stabilisierung bemerkbar, so z.B. Unempfindlichkeit gegenüber Elektrolyten und hohe Lagerstabilität.

Der Zusatz von Lösemitteln ist zum einen aus verfahrenstechnischen, zum anderen aus anwendungstechnischen Gründen nötig: Der bei der Phaseninversion auftretende "Wasserberg", d.h. das sehr hohe Viskositätsmaximum, muß durch verdünnende Zusätze - in der Regel geeignete Lösemittel -oder durch Flexibilisierung des Harzes gesenkt werden, damit die Dispergierung gelingt. Für raumtemperaturhärtende Systeme dient das Lösemittel zudem als Koaleszenzmittel, um eine einwandfreie Verfilmung zu gewährleisten.

Die zuletzt genannten Dispersionen - vor allem die der EP-A 0 530 602 weisen schon einen deutlich erniedrigten Lösemittelgehalt auf bei verbesserten anwendungstechnischen Eigenschaften. Im Zuge der immer weiter anzustrebenden Minimierung an flüchtigen organischen Komponenten (VOC) in wäßrigen Anstrichmitteln erweist sich aber selbst der verringerte Lösemittelgehalt als problematisch. Zudem müssen zur Flexibilisierung des Basisharzes teure Rohstoffe eingesetzt werden, welche zusätzlich negative Auswirkungen auf das Eigenschaftsbild haben können.

Vor allem raumtemperaturhärtende Systeme wie zum Beispiel für den Korrosions- und Bautenschutz oder solche, welche der forcierten Trocknung unterworfen werden, sind unter dem Gesichtspunkt der Lösemittelemission besonders kritisch zu betrachten, da hier nicht wie in Einbrennanlagen eine thermische Nachverbrennung des Lösemittels erfolgen kann.

Eine weitere Verbesserung der bestehenden Systeme wäre also ein Bindemittel auf der Basis einer völlig lösemittelfreien Dispersion, welches für den Bereich raumtemperaturhärtender Beschichtungen eingesetzt werden kann.

Die eingesetzten Lösemittel dienen aus anwendungstechnischer Sicht in der Regel hauptsächlich als Koaleszenzmittel, die nach dem Verfilmen langsam aus dem Film verdampfen und damit gewerbehygienisch ungünstige Arbeitsbedingungen sowie unerwünschte Emission von organischen Bestandteilen in die Atmosphäre verursachen. Zusätzlich bleiben zwangsläufig Lösemittelreste in der Beschichtung, welche deren Eigenschaften nachteilig beeinflussen. Ohne solche Lösemittel erhält man jedoch schlechte Verfilmung und Verlauf, was zu trüben, schlecht haftenden Filmen führt.

Die Anmeldung DE-A 43 27 493 beschreibt ein Verfahren, mit welchem völlig lösemittelfreie Dispersionen erzeugt werden können. Statt Zusatz eines Lösemittels gibt man radikalisch polymerisierbare Monomere (wie z.B. (Meth)Acrylate, Styrol(derivate), Vinylverbindungen usw.) zum Basisharz und dispergiert in üblicher Art und Weise. Nachdem die Dispersion vorliegt, initiiert man eine Emulsionspolymerisation, um auf diesem Wege eine völlig lösemittelfreie Epoxidharzdispersion mit einem gewissen Polymerdispersions-Anteil zu erhalten. Diese Systeme sind vor allem für Einbrennanwendungen interessant, da sie ohne Zusatz von Lösemittel einen hervorragenden Verlauf bei der Härtung mit Säuren, Melaminharzen usw. zeigen.

Daß Reaktivverdünner einen positiven Effekt (Senkung der Viskosität) in konventionellen Epoxidharzformulierungen und wasserverdünnbaren Flüssigharzen haben können, ist dem Fachmann bekannt. Kaum beschrieben ist jedoch ihr Einsatz in Epoxid-Festharz-Dispersionen. In den Patentschriften US-A 4,315,044, US-A 4,399,242 und US-A 4,608,406 wird die Verwendung von C₈-C₈₀-Alkyl-Monoepoxiden in nichtionisch stabilisierten Epoxid-Festharz-Dispersionen für Härtung bei Raumtemperatur oder in der Hitze beschrieben. Diese Reaktivverdünner werden dort in die fertige Dispersion eingerührt und verbessern die Scherstabilität, die Gefrier-Tau-Stabilität, die Lagerstabilität und den Glanz der Beschichtungen, was aber z.T. nur durch den zusätzlichen Einsatz von Glykolen bzw. Glykoläthern befriedigend erreicht werden kann.

Nicht genannt wird hingegen die Funktion der Reaktivverdünner als Koaleszenzmittel, vor allem wird nicht erwähnt, daß die Zugabe des Reaktivverdünners zum Harz vor dem eigentlichen Dispergierprozeß besonders vorteilhaft ist.

Das nachträgliche Zumischen von Stoffen zu einer fertigen, nichtionisch stabilisierten Festharzdispersion gestaltet sich vor allem bei hohen Festkörper-Massenanteilen der Dispersionen als sehr umständlich, da unterschiedlich viskose und unterschiedlich polare Komponenten gut miteinander homogenisiert werden müssen, was in größeren Mischaggregaten nur unbefriedigend verläuft. Außerdem kann auf diese Weise nicht ein so hoher Grad der Durchmischung von Harz und Reaktivverdünner erreicht werden, da diese Komponenten in getrennten Micellen vorliegen.

Der Einsatz von Reaktivverdünnern kann also erfolgen, um die anwendungstechnischen Eigenschaften der Dispersion zu steuern, z.B. Senkung der Mindestfilmbildungstemperatur, Verlängerung der Verarbeitungszeit, Verbesserung von Glanz, Scherstabilität und Stabilität gegenüber Gefrier-Tau-Zyklen, gezielte Beeinflussung von Härte und Elastizität. Der Vorteil gegenüber der Verwendung organischer Lösemittel liegt darin, daß diese Reaktivverdünner bei der Härtungsreaktion in den Film eingebaut werden und somit nicht zur unerwünschten Emission organischer Komponenten führen, der Forderung nach Lösemittelarmut oder -freiheit also entsprochen wird. Die Zugabe des Reaktiwerdünners vor dem Dispergierprozeß hat den wesentlichen Vorteil, daß dieser mit weniger Aufwand deutlich besser emulgiert wird als im Falle einer nachträglichen Zugabe zur fertigen Dispersion, was zu einer verbesserten Qualität der Beschichtung führt. In diesem Falle liegen Reaktivverdünner und Basisharz in gemeinsamen Micellen vor, was durch nachträgliches Einhomogenisieren der Reaktivverdünner nicht zu erreichen ist. Der Gehalt an Reaktivverdünner ist zum Festkörper des Bindemittels bzw. des Lackes hinzuzurechnen.

Der vorliegenden Erfindung lag somit die Aufgabe zugrunde, Epoxidharze und daraus hergestellte selbstemulgierende Dispersionen zu entwickeln, deren emulgierende Komponente einfach herzustellen ist. Diese Systeme sollten ggf. besonders lösemittelarm herzustellen sein, was durch reaktive Verdünnungsmittel erreicht werden kann.

Die vorliegende Erfindung betrifft ein selbstemulgierendes Epoxidharz (A) und eine daraus hergestellte stabile, wäßrige Epoxidharz-Dispersion (1), enthaltend Massenanteile von:
(A) 30 bis 90 %, bevorzugt 40 bis 85 % eines Epoxidharzes herstellbar aus Massenanteilen von
   (A-1) 50 bis 95, vorzugsweise 55 bis 85 % einer oder mehrerer Epoxidverbindung(en) mit mindestens zwei Epoxidgruppen pro Molekül und einem Epoxidgruppengehalt von 300 bis 11 200 mmol/kg (Epoxidäquivalentgewicht von 90 bis 3000 g/mol);
   (A-2) 5 bis 50, vorzugsweise 15 bis 45 % eines aromatischen Polyols und
   (A-3) 0 bis 25, vorzugsweise 1 bis 10 % modifizierender Verbindungen mit mindestens zwei epoxid-reaktiven Gruppen,
   (A-4) 5 bis 25, vorzugsweise 10 bis 20 % eines als Emulgator wirkenden Kondensationsproduktes aus
      (A-4-a) einem vorzugsweise aliphatischen Polyol mit einer gewichtsmittleren molaren Masse M_{w} von 200 bis 20000 g/mol und
      (A-4-b) einer Epoxidverbindung mit mindestens zwei Epoxidgruppen pro Molekül und einem Epoxidgruppengehalt von 500 bis 10 000 mmol/kg (Epoxidäquivalentgewicht von 100 bis 2000 g/mol);
   wobei das Verhältnis der Anzahl der OH-Gruppen zur Anzahl der EP-Gruppen 1:4 bis 1:10 vorzugsweise 1:4 bis 1:8 beträgt und der Epoxidgruppengehalt dieser Kondensationsprodukte zwischen 100 und 6700 mmol/kg (Epoxidäquivalentgewichten 150 g/mol bis 8000 g/mol), bevorzugt zwischen 1000 und 4000 mmol/kg (EV 250 g/mol bis 1000 g/mol) liegt;
(B) 0 bis 20 %, bevorzugt 1 bis 15 % Tenside, vorzugsweise nichtionische Tenside;
(C) 0 bis 20 %, bevorzugt 1 bis 15 % eines reaktiven Verdünnungsmittels, ausgewählt aus einer oder mehereren der folgenden Verbindungen aus der Gruppe der
   (C-1) flüssigen epoxyfunktionellen Verbindungen mit einer molaren Masse unter 1000g/mol, und
   zur radikalischen Polymerisation bzw. Copolymerisation befähigten äthylenisch ungesättigten, ansonsten inerten oder gegebenenfalls funktionellen Monomerer (C-2),
(D) 0 bis 25 %, bevorzugt 1 bis 20 % inerte organische Lösemittel;
(E) 5 bis 70 %, bevorzugt 10 bis 60 % Wasser,
wobei die Summe der Massenanteile stets 100 % beträgt.

Die Epoxidharze (A), welche durch emulgierende Verbindungen des Typs (A-4) modifiziert wurden, können erfindungsgemäß einen Epoxidgruppengehalt von 50 bis 2500 mmol/kg (Epoxidäquivalentgewicht EV von 400 bis 20000 g/mol), für raumtemperaturhärtende Systeme bevorzugterweise von 1000 bis 2500 mmol/kg (EV 400 bis 1000 g/mol) aufweisen, während für die Heißhärtung, welche über die sekundären OH-Gruppen des Harzes erfolgt, bevorzugterweise Epoxidgruppengehalte unterhalb 1700 mmol/kg (EV oberhalb 600 g/mol) angestrebt werden.

Emulgatoren des Typs (A-4) sind an sich bekannt und somit nicht Gegenstand der Erfindung (siehe DE-A 43 10 198, US-A 4,419,467, EP-A 0 493 916). Hingegen wurde deren Verwendung als in das Harz eingebauter Emulgator noch nicht beschrieben, daher sind Epoxidharzdispersionen neu, welche auf solchen Harzen beruhen. Somit sind die Verwendung der Verbindungen (A-4) als eingebauter Emulgator und die darauf beruhenden Epoxidharzdispersionen ebenfalls Gegenstand der vorliegenden Erfindung.

Die Erfindung betrifft weiterhin ein Verfahren zur Herstellung einer wäßrigen Epoxidharzdispersion (I), dadurch gekennzeichnet, daß zunächst die emulgierende Komponente (A-4) und darauf das Epoxidharz (A) durch Kondensation der Komponenten (A-1), (A-2), und gegebenenfalls (A-3) mit (A-4) bei erhöhten Temperaturen in Gegenwart von Kondensationskatalysatoren hergestellt wird, anschließend bei tieferer Temperatur das Verdünnungsmittel (C-1) zugefügt wird, darauf gegebenenfalls zusätzliches Dispergiermittel (B) und gegebenenfalls Lösemittel (D) einhomogenisiert wird und schließlich eine wäßrige Dispersion durch portionsweises Zudosieren von Wasser (E) erhalten wird.

Die Erfindung betrifft weiterhin ein Verfahren zur Herstellung einer wäßrigen Epoxid-Polyacrylat-Dispersion (1), dadurch gekennzeichnet, daß zunächst die emulgierende Komponente (A-4) und darauf das Epoxidharz (A) durch Kondensation der Komponenten (A-1), (A-2), gegebenenfalls (A-3) mit (A-4) bei erhöhten Temperaturen in Gegenwart von Kondensationskatalysatoren wie oben beschrieben hergestellt wird, anschließend bei tieferer Temperatur zumindest eine Teilmenge des Verdünnungsmittels (C) zugefügt wird und gegebenenfalls eine Reaktion der Monomeren (C-2) mit dem Epoxidharz (A) teilweise abläuft, darauf gegebenenfalls das Dispergiermittel (B) und gegebenenfalls Lösemittel (D) einhomogenisiert wird und eine wäßrige Dispersion durch portionsweises Zudosieren von Wassei (E) erhalten wird, worauf man mit Hilfe eines geeigneten Initiatorsystems und gegebenenfalls unter Zugabe des restlichen Verdünnungsmittels (C) bei geeigneten Temperaturen die Monomeren (C-2) in einem Emulsionspolymerisationsverfahren polymerisiert und dadurch eine Polymerdispersion erhält. Die gegebenenfalls verwendeten Teilmengen des Verdünnungsmittels können verschiedener Zusammensetzung hinsichtlich Menge und Art der Bestandteile (C-1) und (C-2) sein.

Das Massenverhältnis von Epoxidharz (A) zu Additionspolymeren aus den Monomeren (C-2) liegt von 100 : 1 bis 20 : 80, bevorzugterweise zwischen 100 : 10 und 50 : 50. Dabei enthält das Polymere aus den Monomeren (C-2) gegebenenfalls glycidylgruppenhaltige Monomere, bevorzugt in einem Massenanteil von 2,5 bis 25 %. Der Massenanteil an Reaktivverdünner (C-1) kann bis zu 25 % bezogen auf die Summe der Massen der Polymere (A) und (C-2) betragen. Der Massenanteil an optionalem Dispergiermittel (B) bezieht sich auf sämtliche nicht wasserlöslichen Bestandteile der Dispersion, d.h. auf das Epoxidharz (A), das Polymer (C-2) und Reaktivverdünner (C-1) und liegt zwischen 0 und 25 %, bevorzugt zwischen 0 und 10 %, besonders bevorzugt aber bei 0 %. Der Festkörper-Massenanteil der erfindungsgemäßen Dispersion liegt zwischen 30 und 90 %, bevorzugt aber von 55 bis 75 %, wobei die Dispersion bis 10 % Lösemittel enthalten kann.

Weiterer Gegenstand der Erfindung sind wäßrige Beschichtungsmittel auf Basis der erfindungsgemäßen Dispersion, enthaltend: Massenanteile von
(I) 40 bis 90 %, bevorzugt 50 bis 85 % der erfindugsgemäßen Epoxidharzdispersion,
(II) 10 bis 60 %, bevorzugt 15 bis 55 % eines wäßrigen Härtungsmittels, welches sich für die Härtung bei Raumtemperatur, bei erhöhten Temperaturen (forcierte Trocknung) oder unter Einbrennbedingungen eignet, und gegebenenfalls
(III) 0 bis 40 %, bevorzugt 5 bis 35 % übliche Additive, Füllstoffe, Pigmente und Katalysatoren.

Das erfindungsgemäße Bindemittel wird hergestellt durch Abmischen dieser Dispersion mit einem geeigneten Härtungsmittel (II), gegebenenfalls gefolgt von dem Fachmann bekannten Zuschlagstoffen gemäß (III).

Bei den Epoxidverbindungen entsprechend (A-1) und (A-4-b) handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein und auch Hydroxylgruppen und Polyäthereinheiten aufweisen. Sie können weiterhin solche Substituenten und/oder funktionelle Gruppen enthalten, die unter den Mischungs- oder Reaktionsbedingungen keine störenden Nebenreaktionen verursachen, beispielsweise Alkyl- oder Arylsubstituenten, Äthergruppierungen und ähnliche.

Vorzugsweise handelt es sich dabei um Polyglycidyläther auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). In einer Variante werden drei- und höherfunktionelle Hydroxylverbindungen zu den bevorzugten zweiwertigen gemischt, sodaß die mittlere Epoxidfunktionalität der Komponenten (A-1) bzw. (A-4-b) über zwei liegt.Der Epoxidgruppengehalt dieser Epoxidverbindungen liegt vorzugsweise zwischen 500 und 10 000 mmol/kg (EV 100 bis 2000 g/mol), insbesondere zwischen 2800 und 10 000 mmol/kg (EV 100 bis 350 g/mol).

Als mehrwertige Phenole sind beispielsweise zu nennen: Resorcin, Hydrochinon, 2,2-Bis-(4-hydroxyphenyl)-propan (Bisphenol A), Dihydroxydiphenylmethan (Bisphenol F, gegebenenfalls Isomerengemische), Tetrabrombisphenol A, 4,4'-Dihydroxydiphenylcyclohexan,4,4'-Dihydroxy-3,3'-dimethyldiphenylpropan,4,4'-Dihydroxydiphenyl, 4,4'-Dihydroxybenzophenon, Bis-(4-hydroxy-phenyl)-1,1-äthan, 2,2-Bis [4-(2-hydroxypropoxy)phenyl]-propan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris(4-hydroxyphenyl)-methan, Bis-(4-hydroxyphenyl-)äther, Bis-(4-hydroxyphenyl-)sulfon, sowie die Halogenierungs- und Hydrierungsprodukte der vorstehend genannten Verbindungen. Bisphenol A ist hierbei besonders bevorzugt.

Als Beispiele für mehrwertige Alkohole seien Äthylenglykol, Diäthylenglykol, Triäthylenglykol, Polyäthylenglykole (n= 1 bis 35), 1,2-Propylenglykol, Polypropylenglykole (n= 1 bis 15), 1,3-Propylenglykol, 1,4-Butandiol, 1,5-Pentandiol, 1,6-Hexandiol, 1,2,6-Hexantriol, Glycerin, Neopentylglykol, 1,4-Dimethylolcyclohexan, Trimethyloläthan, Trimethylolpropan, aber auch Blockcopolymere von Äthylenoxid, Propylenoxid, sowie äthoxylierte und propoxylierte Bisphenole wie z.B. propoxyliertes Bisphenol A, genannt. Polyäthylenglykole und Polypropylenglykole (n = 8 bis 10) sind hierbei besonders bevorzugt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, oder auch mit sauren Polyestern erhält. Beispiele sind Adipinsäurediglycidylester, Phthalsäurediglycidylester und Hexahydrophthalsäurediglycidylester.

Eine ausführliche Aufzählung geeigneter Epoxidverbindungen findet sich in dem Handbuch "Epoxidverbindungen und Epoxidharze" von A.M. Paquin, Springer Verlag, Berlin 1958, Kapitel IV und in Lee, Neville, "Handbook of Epoxy Resins", Mc Graw-Hill Book Co., 1967, Chapter 2. Die genannten Epoxidverbindungen können einzeln oder im Gemisch eingesetzt werden.

Als aromatische Polyole entsprechend (A-2) kommen vorzugsweise die aromatischen OH-gruppenhaltigen Verbindungen in Frage, die vorstehend bei den Komponenten (A-1) / (A-4-b) beschrieben wurden, also mehrwertige, vorzugsweise zweiwertige Phenole, deren Halogenierungsprodukte und/oder Novolake. Besonders bevorzugt ist auch hier Bisphenol A.

Bei den modifizierenden Verbindungen gemäß (A-3) handelt es sich um Verbindungen mit mindestens zwei funktionellen Gruppen, welche zur Reaktion mit den Epoxidgruppen der Komponente (A-1) befähigt sind, und welche sich nicht unter den aromatischen Polyolen gemäß (A-2) einordnen lassen. Ihr Einsatz kann erfolgen, um durch gezielte Modifikation wünschenswerte Eigenschaften des Basisharzes (A) einzustellen. Hierbei kann es sich um Polyamine (z.B. Äthylendiamin, Diäthylentriamin, Triäthylentetramin, Tetraäthylenpentamin usw.), Polyoxyalkylenoxide mit endständigen Aminogruppen (z.B. die Jeffamine® der Firma TEXACO und Novamine®), Polycarbonsäuren (z.B. Maleinsäure, Fumarsäure, Phthalsäure, Bernsteinsäure, dimere und trimere Fettsäuren usw. und deren Anhydride, soweit verfügbar) sowie aliphatische Polyole (z.B. Äthylenglykol, Propylenglykol, Butylenglykol, Polyäthylenglykol, Polypropylenglykol, Trimethylolpropan und -äthan, Neopentylglykol, Glycerin usw.) handeln. Besonders bevorzugt sind dimere Fettsäuren mit einem Gehalt von 20 bis 50 Kohlenstoffatomen und Jeffamine®.

Bei den Polyolen der Komponente (A-4-a) handelt es sich um Polyole, ausgewählt aus der Gruppe der Polyacrylat-Polyole, Polyester-Polyole, PolyätherPolyole, Polycarbonat-Polyole und Polyurethan-Polyole. Bevorzugt werden Polyole mit gewichtsmittleren molaren Massen (M_{w}; Gelpermeationschromatographie; Polystyrolstandard) von zwischen 600 und 12000, insbesondere 4000 bis 10000 g/mol und OH-Zahlen zweckmäßigerweise von 6 bis 560, bevorzugt 9 bis 187 mg/g. Weiter werden rein aliphatische Polyole bevorzugt. Besonders bevorzugt sind aliphatische Polyätherpolyole mit Oxyalkylenbausteinen ausgewählt aus Oxyäthylen- und Oxypropylenbausteinen und deren Mischungen, sowie Polyesterpolyole, die als Diolkomponente mindestens einen Teil an oligomeren oder polymeren Polyoxyalkylenglykolen enthalten, deren Bausteine ausgewählt sind aus Oxyäthylen- und Oxypropylen-Bausteinen. Soweit die Polyole keine solchen hydrophilen Polyoxyalkylengruppen enthalten, erhalten sie die erforderliche Hydrophilie durch ihren Gehalt von 10 bis 5000 mmol/kg an funktionellen Gruppen, die in Wasser Ionen bilden können. Die ionischen Gruppen können kationischer oder anionischer Natur sein, bevorzugt sind anionisch modifizierte Polyole. Beispielsweise werden anionisch modifizierte Polyester- oder Polyurethanpolyole hergestellt, indem ein Teil der niedermolekularen Diol- oder Polyolkomponente durch eine Säuregruppen-haltige Diol- oder Polyolkomponente oder eine andere Säuregruppen-haltige Komponente, die weiter mindestens eine mit Säure reagierende Gruppe enthält, ersetzt wird. Besonders geeignet sind dafür Hydroxycarbonsäuren wie Weinsäure und Dimethylolpropionsäure, sowie Aminosäuren wie Taurin, Lysin und Ornithin, und Hydroxyaminosäuren wie Serin. Anionisch modifizierte Polyacrylatpolyole können beispielsweise durch Copolymerisation geeignet gewählter Mengen von Alkyl(meth)acrylaten mit Hydroxyalkyl(meth)acrylaten und (Meth)Acrylsäure hergestellt werden, dabei wird die Menge des Hydroxyalkyl(meth)acrylats nach der geforderten Hydroxylzahl und die Menge der Säure nach dem erforderlichen Gehalt an ionischen Gruppen bemessen.

Diese Polyole besitzen vorzugsweise nur endständige, primäre OH-Gruppen. Beispielsweise seien hier Blockcopolymere aus Äthylenoxid und Propylenoxid sowie Polyäthylen-, Polypropylen-, Polybutylenglykole genannt, wobei auch Gemische der jeweiligen Polyalkylenglykole eingesetzt werden können. Vorzugsweise werden Polyäthylenglykole bzw. Produkte / Mischungen mit hohem Polyäthylenoxidgehalt verwendet.

Zusätzlich können zum erfindungsgemäßen selbstemulgierenden Epoxidharz (A) auch weitere Dispergiermittel (B) anionischer, kationischer und vorzugsweise nichtionischer Art verwendet werden. In Frage kommen Alkylbenzolsulfonate, primäre und sekundäre Alkansulfonate, α-Olefinsulfonate, Alkylsulfate und Alkyläthersulfate als anionische sowie quaternäre Ammoniumverbindungen als kationische Tenside in Frage, wobei die ionischen Gruppen nicht mit den Epoxidgruppen wechselwirken dürfen. Bevorzugt ist aber die Verwendung nichtionischer Tenside wie äthoxylierte oder äth/propoxylierte Alkohole, Oxoalkohole, Alkylphenole (z.B. Arcopal® der Firma Hoechst), Rizinusöle, Ester, Glycerinstearate, Fettsäuren, Fettamine, Fettalkohole, aber auch z.B. Äthylenoxid-Propylenoxid-Blockcopolymere (z.B. Pluronic® der Firma BASF). Auch die speziell zur Dispergierung von Epoxidharzen beschriebenen Emulgatoren können zum Einsatz kommen, wie z.B. aus US-A 4,423,201 und US-A 4,446,256 (Produkte aus Polyalkylenglykolen, Diisocyanaten und Bisphenolen), EP-A 0 497 404 (Produkte aus Alkoxypolyalkylenglykolen, Anhydriden und Alkylenoxiden, Epoxyalkoholen oder Diglycidyläthern), WO-A 91/10695 (Produkte aus Polyglycidyläthern, bifunktionelle Verbindungen und Alkoxypolyalkyienglykolen), EP-A 0 109 173 (Produkte aus Polyoxyalkylenpolyaminen und Epoxidharzen) und DE-A 41 36 943 (Produkte aus Polyalkylenglykolen mit Diisocyanaten und Polyepoxiden).

Als Komponente (C-1), niedermolekulare flüssige epoxyfunktionelle Verbindungen sind zu nennen Mono- und Diglycidyläther, welche u.a. unter dem Begriff Reaktivverdünner bekannt sind, z.B. para-tert.-Butylphenylglycidyläther, n-Butylglycidyläther, Phenylglycidyläther, ortho-Kresylglycidyläther, Butandioldiglycidyläther, Hexandioldiglycidyläther, Neopentylglykoldiglycidyläther, Dimethylolcyclohexandiglycidyläther, 2-Äthylhexylglycidyläther, höhere Alkylglycidyläther usw. (z.B. die Reaktivverdünner der Serie Grilonit® RV der Firma Ems, Epodil® der Firma Anchor oder Eurepox® RV der Firma Schering), Versaticsäureglycidylester (Cardura® E 10 der Firma Shell), flüssige Polyoxyalkylenglykoldiglycidyläther (z.B. Beckopox® EP 075 der Firma Hoechst), wobei deren molare Masse unter 1000 g/mol liegt, aber auch flüssige Epoxidharze wie z.B. Bisphenol A-und F-diglycidyläther. Die Komponente (C-1) wird im folgenden aus Gründen der Einfachheit Reaktivverdünner genannt. Bevorzugte Reaktivverdünner sind Hexandioldiglycidyläther und para-tert.-Butylphenylglycidyläther.

Als Monomere gemäß (C-2) kommen sämtliche äthylenisch ungesättigten Verbindungen in Frage, welche zur radikalischen Polymerisation in wäßriger Emulsion befähigt sind und nicht unerwünscht bei Raumtemperatur mit der vorliegenden Epoxidharzdispersion wechselwirken. Dazu zählen Acryl-, Methacryl- und höhere Alkacrylsäuren, sowie deren Alkylester (C₁- bis C₁₈-Alkyl(meth)acrylate, z.B. Methylacrylat und -methacrylat, Äthylacrylat und -methacrylat, n- und iso-Propylacrylat und -methacrylat, n-, iso- und tert-Butylacrylat, n- und tert-Butylmethacrylat, 2-Äthylhexylacrylat und -methacrylat, 4-tert-Butylcyclohexylacrylat, Isobornylacrylat und -methacrylat usw.) und Derivate (z.B. Acrylnitril), aber auch Vinylderivate (z.B. Styrol, α-Methylstyrol, Vinyltoluole, Vinylacetat, Vinylchlorid, Vinylidenchlorid, N-Vinylpyrrolidon usw.) und α,β-ungesättigte Carbonsäuren wie Maleinsäure, Fumarsäure, Itaconsäure usw. sowie deren Derivate, aber auch Alkene wie Isopren und Butadien. Die Monomeren können auch funktionelle Gruppen enthalten, welche bei der später anzustrebenden Härtungsreaktion partizipieren, so eignen sich hier z.B. speziell glycidylfunktionelle Monomere (z.B. Glycidylmethacrylat, Glycidylacrylat). Schließlich können auch mehrfunktionelle Monomere, sei es bezüglich der Polymerisation oder der Härtung, zugegen sein, so z.B. 1,6-Hexandioldiacrylat und Divinylbenzol.

Der Dispersion können gegebenenfalls auch Lösemittel (D) zugesetzt werden. Als organische Lösemittel kommen hier insbesondere in Frage Glykole, Mono- und Diäther- und -ester von Glykolen mit Alkoholen und Säuren, aliphatische Alkohole mit gegebenenfalls verzweigten Alkylresten von 1 bis 12 Kohlenstoffatomen, cycloaliphatische und araliphatische Alkohole sowie Ester und Ketone, wobei diese Lösemittel einzeln oder im Gemisch eingesetzt werden können. Als Beispiele seien genannt: Äthylenglykol, Äthylenglykolmonomethyläther, Äthylenglykoldimethyläther, Butylglykol, Methoxypropanol, Äthoxypropanol, Äthanol, 1-und 2-Propanol, Butanol, Cyclohexanol, Benzylalkohol, Essigsäureäthylester, Aceton so wie Methylisobutylketon, aber auch Aromaten wie Toluol oder Xylol können verwendet werden. Bevorzugte Lösemittel sind Butylglykol, Methoxypropanol, Methoxybutanol, Isopropoxypropanol, Äthoxypropanol, Dipropylenglykoldimethyläther, 2-Propanol und Benzylalkohol.

Als Härter (II) für die Epoxidharze (I) der Erfindung können die hierfür bekannten Härtungsmittel bzw. härtenden Verbindungen (Epoxidhärter) eingesetzt werden, wie basische Härtungsmittel (Aminhärter), beispielsweise Polyamine, Mannich-Basen, Addukte von Aminen an Polymere wie Polyepoxide und Polyamidoamine.

Die Härtung der erfindungsgemäßen Epoxidharzdispersionen (I) ist ferner durch sogenannte latente Härtungsmittel, d.h. Verbindungen, die erst bei höherer Temperatur, beispielsweise bei 60 bis 250 °C, ihre vernetzende Wirkung gegenüber Epoxidverbindungen entfalten, möglich. Beispiele für solche Härter sind Harnstoff, Dicyandiamid, Imidazol, Guanidin, Hydrazid und Derivate der genannten Verbindungen. Aber auch z.B. Melaminharze oder saure Härtungsmittel sind denkbar. Bevorzugt wird von diesen latenten Härtungsmitteln Dicyandiamid eingesetzt.

Beispiele für basische Härtungsmittel, vorzugsweise für die bevorzugte Härtung bei Raumtemperatur und/oder niedrigeren Temperaturen (Aminkalthärter), die allgemein im Äquivalentverhältnis Epoxidäquivalent zu Aminwasserstoffäquivalent von 1 zu (0,75 bis 2,0) eingesetzt werden, sind Polyalkylenamine, wie Diäthylentriamin, Triäthylentetramin, Tetraäthylenpentamin, Pentaäthylenhexamin u.a., ferner 2,2,4- und/oder 2,4,4-Trimethylhexamethylendiamin, Bis-(3-aminopropyl)amin, 1,4-Bis-(3-aminopropyl)-piperazin, N,N-Bis(3-aminopropyl)-äthylendiamin, Neopentandiamin, 2-Methyl-1,5-pentandiamin, 1,3-Diaminopentan, Hexamethylendiamin u.a., sowie cycloaliphatische Amine wie 1,2- bzw. 1,3-Diaminocyclohexan, 1,4-Diamino-3,6-diäthylcyclohexan,1,2-Diamino-4-äthylcyclohexan, 1-Cyclohexyl-3,4-diaminocyclohexan, Isophorondiamin und Umsetzungsprodukte davon, 4,4'-Diaminodicyclohexyl-methan und -propan, 2,2-Bis(4-aminocyclohexyl)-methan und propan, 3,3'-Dimethyl-4,4'-diaminodicyclohexylmethan, 3-Amino-1-cyclohexyl-aminopropan, 1,3- und 1,4-Bis-(aminomethyl)-cyclohexan.

Als araliphatische Amine werden insbesondere solche eingesetzt, bei denen aliphatische Aminogruppen vorhanden sind, z.B. meta- und para-Xylylendiamin, und/oder deren Hydrierungsprodukte.

Die genannten Amine können allein oder als Gemische verwendet werden.

Geeignete Mannich-Basen werden durch Kondensation von Polyaminen, vorzugsweise Diäthylentriamin, Triäthylentetramin, Isophorondiamin, 2,2,4- bzw. 2,4,4-Trimethylhexamethylendiamin, 1,3- und 1,4-Bis-(aminomethyl)-cyclohexan, insbesondere meta- und para-Xylylendiamin mit Aldehyden, vorzugsweise Formaldehyd und ein- oder mehrwertigen Phenolen mit mindestens einer gegenüber Aldehyden reaktiven Kernposition, beispielsweise den verschiedenen Kresolen und Xylenolen, para-tert.-Butylphenol, Resorcin, 4,4'-Dihydroxydiphenylmethan, 2,2-Bis(4-hydroxyphenyl)propan, vorzugsweise aber Phenol hergestellt.

Als Amin-Epoxid-Addukte kommen beispielsweise Umsetzungsprodukte von Polyaminen, wie z.B. Äthylendiamin, Propylendiamin, Hexamethylendiamin, 2,2,4-,2,4,4-Trimethylhexamethylendiamin, meta-Xylylendiamin und/oder Bis-(aminomethyl)-cyclohexan mit endständigen Mono- oder Polyepoxiden, wie z.B. Propylenoxid, Hexenoxid, Cyclohexenoxid, oder mit Glycidyläthern wie Phenylglycidyläther, tert.-Butylglycidyläther, Äthylhexylglycidyläther, Butylglycidyläther oder mit Glycidylestern, wie dem von der Firma Shell vertriebenen Glycidylester der Versaticsäure, Cardura® E 10, oder den unter (A-1) genannten Polyglycidyläthern und -estern in Betracht.

Polyamidoamine, die zur Härtung der erfindungsgemäßen Epoxidharzdispersionen verwendet werden können, werden beispielsweise durch Umsetzung von Polyaminen mit Mono- oder Polycarbonsäuren, z.B. dimerisierten Fettsäuren, erhalten.

Bevorzugt werden als Aminhärter neben den oben genannten Polyaminen wasserlösliche Polyoxyalkylendi- und -polyamine mit zahlenmittleren molaren Massen von 100 bis 2000 g/mol, z.B. die von der Firma Texaco unter dem Warenzeichen Jeffamine® vertriebenen Produkte, sowie die leicht in Wasser dispergierbaren Härtungsmittel, wie sie in der DE-B 23 32 177 und der EP-B 0 000 605 beschrieben sind, also z.B. modifizierte Amin-Addukte, eingesetzt.

Zur Erzielung einer schnelleren und/oder vollständigeren Durchhärtung können die aus den erfindungsgemäßen Epoxidharzdispersionen mit den genannten Aminhärtern erhältlichen Beschichtungen auch 15 bis 120 Minuten auf 50 bis 120 °C erhitzt werden (sog. forcierte Trocknung).

Als Härtungsmittel für die Heißhärtung eignen sich wasserlösliche oder wassermischbare Polycarbonsäuren. Beispiele für solche Polycarbonsäuren sind Cyclopentantetracarbonsäure,Cyclobutantetracarbonsäure 1 ,2,3,4-Tetrabutancarbonsäure, Weinsäure, Malonsäure, Äpfelsäure, Zitronensäure, Aconitsäure u.a.

Ferner sind Anhydride oder saure Ester dieser Säuren mit mehrwertigen Alkoholen mit 2 bis 12, vorzugsweise 2 bis 6 C-Atomen, wie beispielsweise Neopentylglykol, Glycerin, Trimethyloläthan oder -propan, den Alkandiolen und deren Oligomeren, die gegebenenfalls eine oder mehrere Ätherbrücken enthalten, wie Äthylenglykol, Propan- und Butandiole, geeignet, wobei die Ester stets mindestens zwei freie Carboxylgruppen aufweisen. Es ist auch möglich, saure Ester mit zwei oder mehr Carboxylgruppen von Carbonsäuren, wie beispielsweise Pyromellithsäure, Trimellithsäure, Phthalsäure, Endomethylentetra- oder -hexahydrophthalsäure, Maleinsäure, Fumarsäure bzw. deren Anhydriden, sofern diese existieren, mit mehrwertigen Alkoholen, z.B. den vorstehend genannten, als Polycarbonsäurehärter zu verwenden, sofern diese sauren Ester eine ausreichende Wasserlöslichkeit bzw. Wasserverdünnbarkeit besitzen. Ebenfalls lassen sich geeignete saure hydrophile Polyester beispielsweise der mehrwertigen Säuren mit den genannten mehrwertigen Alkoholen einsetzen. Auch Reaktionsprodukte dieser Säureanhydride oder Säuren mit polyaminofunktionellen Verbindungen, wie z.B. Polyamine wie Diäthylendiamin, Diäthylentriamin, Triäthylentetramin und höhere Homologe, oder mit den verschiedensten Polyoxyalkylendiaminen (Jeffamine® der Firma Texaco), sowie an den Hydroxylgruppen modifizierte Hydroxycarbonsäuren, wie z.B. alkoxylierte Zitronensäure oder Weinsäure etc., sowie sämtliche unter Härtungsbedingungen zur Umesterung befähigten Säuren, wie z.B. die Methylester von Trimellithsäure oder Äpfelsäure lassen sich als Härtungsmittel einsetzen. Geeignet sind ebenfalls saure Salze der genannten Säuren, bevorzugt solche mit flüchtigen Basen, sowie weitere Derivate, welche unter Härtungsbedingungen reaktive Carboxylgruppen freisetzen. Bevorzugt werden als saure Härtungsmittel Polycarbonsäuren eingesetzt.

Die Härtung der Epoxidharzdispersionen mit den sauren Härtungsmitteln erfolgt zweckmäßigerweise bei höheren Temperaturen, z.B. bei 60 bis 250 °C, vorzugsweise bei 80 bis 200 °C, in einer bis 150 Minuten. Zur Erzielung einer vollständigeren Durchhärtung bzw. zur Senkung der für eine ausreichende Durchhärtung erforderlichen Temperaturen können den genannten sauren Härtern noch geringe Mengen von Verbindungen beigegeben werden, die die Umsetzung Carboxylgruppe/Epoxidgruppe katalysieren. Geeignete Verbindungen sind beispielsweise starke Protonsäuren wie Phosphorsäure oder para-Toluolsulfonsäure, tertiäre Amine wie Triäthylamin, N,N-Dimethylbenzylamin, Stickstoffheterocyclen wie Imidazol, Pyridin und deren Derivate, Trialkyl- und Triarylphosphine sowie entsprechende Phosphoniumverbindungen und Metallsalze bzw. -chelate wie zum Beispiel Zinn(ll)octoat.
Zusätzlich zu den vorstehend beschriebenen Härtern können zur Härtung auch Amin- und/oder Phenolharze genommen werden, die in Massenanteilen von 5 bis 50 %, vorzugsweise 10 bis 35 %, bezogen auf den Gesamtfeststoffgehalt der fertigen Dispersion, eingesetzt werden. Gegebenenfalls wird die Dispersion dabei noch durch zusätzliches Wasser auf einen Gesamtfeststoffgehalt von 10 bis 80 % eingestellt. Beispiele für derartige Aminharze sind Aminaldehydharze, d.h. Kondensationsprodukte von Aldehyden mit Melamin (Melaminharze), Harnstoff (Harnstoffharze), Acetoguanamin (Acetoguanaminharze) oder ähnlichen Verbindungen bzw. entsprechende Präkondensate. Bevorzugte Aldehydkondensationsprodukte des Melamins sind vor allem die Melamin-Methoxy-Alkyläther, wobei die Alkylreste Methyl-, n- oder i-Butylgruppen, bevorzugt Methylgruppen sind, wie Hexamethoxymethylmelamin, Äthoxymethoxymethylmelamin, Monomethylolpentamethoxymethylmelamin, Dimethyloltetramethoxymethylmelamin, Trimethyloltrimethoxymethylmelamin und der gleichen mit weitgehend monomerer Struktur sowie entsprechende oligomere oder polymere Produkte.

Als Phenolharzhärter seien Resole, Formaldehyd-Phenolcarbonsäureharze und Phenolharzvorprodukte genannt, wobei die handelsüblichen verätherten, mit Wasser verdünnbaren Phenolharzresole bevorzugt sind.

Gegebenenfalls kann man den Phenol- und/oder Aminharz enthaltenden Dispersionen auch saure Katalysatoren, wie para-Toluolsulfonsäure, Cyclohexansulfaminsäure, saures Butylphosphat und Phosphorsäure - gegebenenfalls auch als (Amin)salze - zusetzen, um die Geschwindigkeit der Härtungsreaktion zu beschleunigen, so daß man Filme oder Überzüge erzeugt, die bei niedrigerer Temperatur oder in kürzerer Zeit aushärten.

Als übliche Zusatzstoffe im Sinne von (III), die eventuell in den erfindungsgemäßen Dispersionen bzw. Bindemitteln vorhanden sein können, seien hier beispielsweise die üblichen Lackadditive wie Pigmente, Pigmentpasten, Antioxidantien, Verlaufs- bzw. Verdickungsmittel, Entschäumer/Entlüfter und/oder Netzmittel, Reaktivverdünner, Füllstoffe, Katalysatoren, Konservierungsmittel und Schutzkolloide genannt. Diese Additive, wie auch die Härter, können dem System gegebenenfalls erst unmittelbar vor der Verarbeitung zugegeben werden.

Vorzugsweise wird die emulgierende Komponente (A-4) durch Kondensation der genannten Polyole (A-4-a) mit den Polyglycidyläthern (A-4-b) in Gegenwart geeigneter Katalysatoren bei 50 bis 200 °C, vorzugsweise bei 90 bis 170 °C, hergestellt, wobei das Äquivalentverhältnis der OH-Gruppen zu den EP-Gruppen 1:2 bis 1:10, vorzugsweise 1:4 bis 1:8 beträgt und der Epoxidgruppengehalt (Epoxidäquivalentgewicht) dieser Kondensationsprodukte zwischen 125 und 6700 mmol/kg (150 g/mol und 8000 g/mol), bevorzugt zwischen 1000 und 4000 mmol/kg (250 g/mol und 1000 g/mol) liegt.

Als Katalysatoren für die Darstellung von (A-4) eignen sich starke anorganische und organische Basen, wie zum Beispiel Natriumhydroxid, Kaliumhydroxid, Lithiumhydroxid, Bariumhydroxid, Strontiumhydroxid, Alkalialkoholate wie Natriummethylat, Lithiummethylat, Natriumäthylat und Kaliumdodecylat sowie die Alkalisalze von Carbonsäuren, wie zum Beispiel Natrium- und Lithiumstearat. Ebenfalls geeignet sind starke anorganische und organische Protonsäuren, zum Beispiel Phosphorsäure, Tetrafluorborsäure und Benzolsulfonsäure. Ferner können als Katalysatoren Lewis-Säuren verwendet werden. Als Beispiele seien Zinn(lV)chlorid, Titan(lV)chlorid, Titan(lV)isopropylat, Triäthyloxoniumtetrafluoroborat sowie Bortrifluorid und seine Komplexe, zum Beispiel mit Phosphorsäure, Essigsäure (1:1 und 1:2), Methanol, Diäthyläther, Tetrahydrofuran, Phenol, Äthylenglykolmonoäthyläther, Polyäthylenglykol (MG 200), Dimethylsulfoxid, Di-n-Butyläther, Di-n-Hexyläther, Bernsteinsäure und aliphatische, cycloaliphatische, araliphatische Amine sowie Stickstoff-Heterocyclen.

Bevorzugt werden als Katalysatoren BF3-Diäthyläther, BF3-Aminkomplexe und wäßrige Tetrafluorborsäure eingesetzt. Der Massenanteil an Katalysator beträgt im allgemeinen 0,1 bis 5, vorzugsweise 0,1 bis 1 %, bezogen auf das Reaktionsgemisch. Zur besseren Dosierung kann der Katalysator in einem Lösemittel wie Diäthyläther, einem Glykol- oder cyclischen Äther, Ketonen und dergleichen verdünnt werden.

Zur Herstellung von (A-4) erwärmt man die umzusetzenden Gemische aus Hydroxylgruppen und Epoxidgruppen enthaltenden Verbindungen bis zu der Temperatur, bei der die Kondensation mit ausreichender Geschwindigkeit d. h. in 30 min bis 5 Stunden, abläuft. Die Umsetzung verfolgt man zweckmäßig über die Zunahme des Epoxidäquivalents, das eine Verminderung des Epoxidgruppengehaltes anzeigt. Die Reaktion kann durch Kühlung unter die Reaktionstemperatur abgebrochen werden.

Zur Herstellung der erfindungsgemäßen Dispersionen wird zunächst das Epoxidharz (A) durch Kondensation der Komponenten (A-1) und (A-2), gegebenenfalls (A-3), mit (A-4) bei erhöhten Temperaturen, im allgemeinen bei 100 bis 220 °C, vorzugsweise bei 150 bis 180 °C, in Gegenwart eines die Kondensation beschleunigenden Katalysators hergestellt.

Geeignete Kondensationskatalysatoren sind beispielsweise Phosphine, wie Triphenylphosphin, Phosphoniumsalze, wie z.B. Benzyltrimethylphosphoniumchlorid, tertiäre Amine, wie N,N-Dimethylbenzylamin, quaternäre Ammoniumsalze, wie z.B. Tetramethylammoniumchlorid, Alkalihydroxide, wie Natriumhydroxid und Lithiumhydroxid, Alkalicarbonate, wie Natriumcarbonat und Lithiumcarbonat, Alkalisalze organischer Säuren, wie z.B. Natriumformiat, Lithiumbenzoat und Lithiumstearat, Lewis-Basen und Lewis-Säuren, wie z.B. Bortrifluorid und seine Komplexe, Titantetrachlorid, Zinnchlorid und Triäthyloxoniumtetrafluoroborat.

Das optionale Verdünnungsmittel (C) wird als gesamte Menge auf einmal vor dem Dispergieren zugesetzt, es dient so als Viskositätssenker und erleichtert die Dispergierung, oder es kann bei einem größeren Menge zum Teil während des Dispergiervorgangs zugegen sein, und der Rest wird nach erfolgter Dispergierung, z.B. kontinuierlich während der Emulsionspolymerisation der Komponente (C-2) zugegeben. Dabei müssen die beiden Teilmengen bezüglich Art und Zusammensetzung der Komponenten (C-1) und (C-2) nicht identisch sein. Auf diese Weise lassen sich bei z.B. Epoxid-Polyacrylat-Dispersionen gezielt coreshell-Partikel erzeugen. Die Anwesenheit des Verdünnungsmittels während der Dispergierung hat den Sinn, daß das Viskositätsmaximum bei der Phaseninversion W/O → O/W nicht durch inerte, in der fertigen Dispersion verbleibende Lösemittel abgesenkt werden muß, wie es in DE-A 41 28 487 beschrieben wurde. Somit gelingt die Formulierung völlig lösemittelfreier Dispersionen - eine weitere erhebliche Verbesserung gegenüber dem Stand der Technik. Ein zu hoher Gehalt während des Dispergiervorganges würde aber die Viskosität zu weit senken, die einzutragende Scherkraft für die Zerteilungsvorgänge könnte nicht mehr aufgebaut werden. Darum ist gegebenenfalls die Aufteilung der Gesamtmenge in zwei zweckmäßige Teilmengen nötig. Das Verdünnungsmittel hat mindetstens eine der Komponenten Reaktiv-Verdünner (C-1) und Monomer(mischung) (C-2). Während der Reaktiv-Verdünner in der fertigen Dispersion unverändert verbleibt (und erst beim Härtungsprozeß eingebaut wird), wird die Monomerkomponente nach der Dispergierung in Wasser polymerisiert und trägt auf diese Weise bereits zum Festkörperanteil der Dispersion bei.

Dem Epoxidharz (A) werden zur Herstellung z.B. der Epoxid-Polyacrylat-Dispersion bei Temperaturen von 60 bis 200 °C, vorzugsweise von 70 bis 120 °C, die Monomeren (C-2) - evtl. stabilisiert mit geeigneten, dem Fachmann bekannten Inhibitoren - und gegebenenfalls Reaktivverdünner (C-1) bzw. eine zweckmäßige Teilmenge, dann gegebenenfalls Dispergiermittel (B), gegebenenfalls gefolgt von organischen Lösemittel (D) zugegeben und 15 bis 180, vorzugsweise 30 bis 90 Minuten, verrührt. Wahlweise läßt sich nach der Zugabe der Monomeren (C-2) eine Reaktion zwischen Epoxidharz und den Monomeren durchführen. wie z.B. Addition von carboxyl- oder aminofunktionellen Monomeren an die Epoxidgruppen oder Pfropfung an aliphatische Kohlenstoffatome der Epoxidkomponenten (A) und (C-2), bevor das Dispergiermittel zugegeben wird.

Danach wird bei Temperaturen von 30 bis 100 °C, bevorzugt 50 bis 90 °C, die entsprechende Menge an Wasser (E) in mindestens zwei Portionen, vorzugsweise in mehreren Teilmengen, unter kräftigem Rühren zudosiert, wodurch die wäßrige Dispersion entsteht. Hierbei können gegebenenfalls geeignete Entschäumer-/Entlüfter-Additive zugesetzt werden. Die Dispergierung erfolgt zweckmäßigerweise unter Zuhilfenahme geeigneter Dispergierapparate, beispielsweise eines schnellaufenden Flügelrührers, eines Mehrimpulswendelrührers, einer Kolloidmühle, eines Homogenisators, eines Dissolvers oder eines sonstigen Schnellmischers mit einer hohen Scherkraft. Dieser Vorgang wird sehr detailliert in DE-A 41 28 487 beschrieben.

Im Falle von z.B. Epoxy-Acrylat-Dispersionen wird nun in der so erhaltenen, (Acrylat-)monomerenhaltigen und gegebenenfalls reaktivverdünnerhaltigen Epoxidharz-Dispersion bei geeigneter Temperatur die Emulsionspolymerisation eingeleitet. Die Temperatur muß ausreichend hoch sein, damit eine zügige Polymerisationsrate erreicht wird, andererseits darf durch eine zu hohe Temperatur die Stabilität der Dispersion nicht gefährdet werden. Bei Redox-Initiatoren wird bevorzugt das Oxidationsmittel zusammen mit dem Verdünnungswasser einhomogenisiert, und das Reduktionsmittel kontinuierlich zudosiert - aber alle denkbaren Varianten sind ebenfalls erfindungsgemäß. Bei höherer Monomerenmenge, als für die Dispergierung benötigt, wird dabei auch die Restmenge der Monomeren (C-2) zudosiert, wobei hier gezielt die Darstellung von core-shell-Acrylatpartikeln möglich ist, um die Eigenschaften der Dispersion in gewünschter Weise zu steuern. Der bevorzugte Temperaturbereich für die Emulsionspolymerisation beträgt 60 bis 90°C, die Reaktionskontrolle erfolgt über Festkörperbestimmung oder Gaschromatographie. Eine unerwünschte Viskositätszunahme kann durch Nachdosieren von Wasser ausgeglichen werden.

Als Initiatoren für die Emulsionspolymerisation kommen solche thermischer Natur oder Redoxsysteme, die sämtlich dem Fachmann gut bekannt sind, in Frage. Thermische Initiatoren sind Peroxide, Hydroperoxide, Perester, Diazoverbindungen, z.B. Dibenzoylperoxid, Acetylperoxid, Benzoylhydroperoxid, tert.-Butylhydroperoxid, Di-tert-Butylperoxid, Lauroylperoxid, Butyrylperoxid, Diisopropylbenzolhydroperoxid, Cumolhydroperoxid, Paramenthanhydroperoxid, Diacetylperoxid, Di-α-Cumylperoxid, Dipropylperoxid, Diisopropylperoxid, Isopropyl-tert-Butylperoxid, Butyl-tert-butylperoxid, Dilauroylperoxid, Difuroylperoxid, Ditriphenylmethylperoxid, Bis(p-Methoxybenzoyl)peroxid, p-Monomethoxybenzoylperoxid, Rubrenperoxid, Ascaridolperoxid, tert.-Butylperoxybenzoat, Diäthylperoxyterephthalat, Propylhydroperoxid, Isopropylhydroperoxid, n-Butylhydroperoxid, tert-Butylhydroperoxid, Cyclohexylhydroperoxid, trans-Decalinhydroperoxid, α-Methylbenzylhydroperoxid, α-Methyl-α-Äthylbenzylhydroperoxid, Tetralinhydroperoxid, Triphenylmethylhydroperoxid, Diphenylmethylhydroperoxid, 2,5-Dimethyl-2,5-bis(2-Äthylhexanoylperoxy)-hexan, 1,1-Bis(tert-Butylperoxy)-cyclohexan und tert-Butylperbenzoat. Redox-Systeme können gewählt werden aus Oxydantien wie z.B. Wasserstoffperoxid, tert-Butylhydroperoxid, Persulfate, in Kombination mit Reduktionsmitteln wie alpha-Hydroxyketone, Ascorbinsäure, Hydrazin und Sulfite, Bisulfite, Metasulfite oder Hydrosulfite. Bevorzugt sollten Initiatoren eingesetzt werden, welche keine oder wenig ionische Verbindungen generieren, um die Wasserempfindlichkeit der später eingebrannten Filme nicht unnötig zu erhöhen. Ein besonders bevorzugtes System ist tert-Butylhydroperoxid/Ascorbinsäure.

In der EP-A 0 051483 werden Epoxidharz-Dispersionen aus selbstemulgierenden Epoxidharzen beansprucht, die Polyalkylenglykol-Glycidyläther neben Polyepoxiden und aromatischen Polyolen enthalten. Da aliphatisch gebundene Glycidyläthergruppen prinzipiell weniger reaktiv sind als aromatisch gebundene, kann man davon ausgehen, daß nicht alle Polyalkylenglykol-Glycidyläther-Gruppen in das Harz eingebaut werden und somit einige frei vorliegen. Für die Härtung der Dispersionen bedeutet das eine Absenkung der Reaktivität und geringere Vernetzung, verbunden mit schlechterer Wasserbeständigkeit - diese Ergebnisse werden in der Praxis tatsächlich gefunden. Um diesen Nachteil abzuschwächen, müßte man bei der Harzsynthese zuerst das gesamte Polyphenol mit dem Polyalkylenglykol-Glycidyläther umsetzen und das verbleibende phenolische Präpolymer mit weiterem Polyepoxid zum Basisharz umsetzen.

Die erfindungsgemäßen Dispersionen (I) sind zwar nach einem ähnlichen Prinzip aufgebaut, jedoch weisen die Epoxidgruppen der emulgierend wirkenden Verbindung (A-4) eine den Polyepoxiden (A-1) bzw. (A-4-b) vergleichbare Reaktivität auf. Somit wird der Emulgator in einem größeren Ausmaß in das Harz eingebaut, und im Harz verbleibende endständige Epoxidgruppen der Komponente (A-4) zeigen keinen nachteiligen Einfluß auf die Härtungsreaktion. Eine zweistufige Harzsynthese, wie oben vorgeschlagen, ist hier nicht nötig. Zudem wird der Emulgator (A-4) nach bekannter Methode aus billigen Rohstoffen aufgebaut, während die Synthese der Polyalkylenglykol-Glycidyläther sehr aufwendig ist (Abtrennung von Alkalichloriden vom wasserlöslichem Produkt nach der Umsetzung von Polyalkylenglykolen mit Epichlorhydrin). Im Idealfall kann die Fertigung der Epoxidharzdispersion ausgehend von der Synthese des Emulgators (A-4) bis hin zum Dispergieren und gegebenenfalls anschließender Emulsionspolymerisation in ein und demselben Reaktor durchgeführt werden.

Im Vergleich zu den in der Patentschrift EP-A 0 272 595 beschriebenen selbstemulgierenden Epoxidharze ist der Emulgator in der erfindungsgemäßen Dispersion in einem größeren Ausmaß eingebaut, was sich z.B. vor allem in der deutlich verbesserten Wasserfestigkeit und geringeren Scherempfindlichkeit der Epoxidharzdispersion (I) widerspiegelt. Die neuen Dispersionen können viel besser pigmentiert werden und lassen sich auch viel besser Spritzen.

Andererseits können nach dem erfindungsgemäßen Verfahren Basisharze erhalten werden, welche gegenüber den in der Anmeldung DE-A 41 28 487 beschriebenen flexibilisierten fremdemulgierten Epoxidharze keine Flexibilisierung durch modifizierende Verbindungen (A-3) benötigen, da schon der eingebaute Emulgator (A-4) eine zusätzliche flexibilisierende Wirkung zeigt. Trotzdem erweisen sich die erfindungsgemäßen Dispersionen (I) als hervorragend für wäßrige Korrosionsschutzbeschichtungen geeignet.

Als Nachteil gegenüber fremdemulgierten Systemen ist zu sehen, daß Harze, welche durch nichtionische Strukturen in der Polymerhauptkette selbstemulgierend wirken, prinzipiell Dispersionen mit ungünstigerem Verhältnis von Viskosität zu Festkörper bei gleicher Teilchengröße ergeben. Das heißt, daß in der Regel niedrigere Festkörper erreicht werden. Durch geschickte Wahl der Parameter bei der Synthese des Emulgators (A-4), nämlich molare Masse des verwendeten Polyoxyalkylenglykols, Verhältnis OH : EP und gezielte Abweichung des Endgehalts an Epoxidgruppen vom theoretischen Wert, lassen sich jedoch Dispersionen herstellen, welche in ihren Kennzahlen vergleichbar sind zu den Systemen der Patentschrift EP-B 0 272 595 und der Anmeldung DE-A 41 28 487.

Die Vorteile des sogenannten Monomerverfahrens unter Verwendung geeigneter Monomerer (C-2) während der Dispergierung sind ausführlich in der Anmeldung DE-A 43 27 493 beschrieben worden. Hier soll noch einmal betont werden, daß durch dieses Verfahren auch höherviskose Harze, d.h. bei höherer molarer Masse und / oder mit eingebauten Emulgatoren, erfolgreich dispergiert werden können. Zudem können gerade für den Einbrennsektor lösemittelfreie Dispersionen gewonnen werden, welche gegenüber lösemittelhaltigen Dispersionen technologische Vorteile bieten.

Bei raumtemperaturhärtenden Systemen ist es wichtig, daß die Mindestfilmbildungstemperatur möglichst lange unterhalb der Substrattemperatur bleibt, damit Koaleszenz der Dispersionspartikel und somit Verfilmung stattfindet. Aus diesem Grunde findet man gerade in diesem Bereich Dispersionen mit nennenswerten Lösemittelgehalten. In diesem Fall kann man das Lösemittel, welches ja als Koaleszenzmittel wirken soll, nicht einfach durch Monomere (C-2) ersetzen, da diese letztendlich polymerisiert werden und somit ihrerseits Harzpartikel bilden. Aus diesem Grunde ist die Verwendung von epoxyfunktionellen Reaktivverdünnern (C-1) sinnvoll, da diese während der Filmbildung als Koaleszenzmittel wirken und hernach bei der Härtung mit in den Film eingebaut werden. Hierbei ist jedoch zu beachten, daß man aufgrund gewerbehygienischer Gesichtspunkte bei der Wahl der Reaktivverdünner Vorsicht walten lassen sollte.

Durch Kombination beider Methoden können maßgeschneiderte Epoxidharz-dispersionen erzeugt werden, wobei die Verwendung von Reaktivverdünnern (C-1) nur bei raumtemperaturhärtenden Systemen Sinn macht und das Monomerverfahren für raumtemperaturhärtende Systeme nur in Verbindung mit Reaktivverdünnern (C-1) und/oder Lösemitteln Erfolg verspricht. Prinzipiell ist aber die Verwendung der geschilderten Verdünnungsmittel im Sinne dieser Erfindung nicht eingeschränkt.

Aufgrund ihrer bereits angesprochenen hervorragenden technischen Eigenschaften, beispielsweise hinsichtlich Haftung, sehr hohe Härte, Korrosionsschutzwirkung, Wasser- und Chemikalienbeständigkeit u.a., eignen sich die erfindungsgemäßen Dispersionen in Kombination mit geeigneten Härtungsmitteln und Zusatzstoffen zur Herstellung von Überzügen, Zwischenbeschichtungen, Anstrichmaterialien, Formmassen und härtbaren Massen für die unterschiedlichsten Anwendungsgebiete. Beispielsweise können sie zur Herstellung von Schutzund/oder Dekorbeschichtungen auf den unterschiedlichsten, insbesondere rauhen und porösen Substraten, wie z.B. Holz, mineralischen Untergründen (z.B. Beton und Stein), Glas, Kunststoffen (z.B. Polyäthylen, Polypropylen usw.), Kompositwerkstoffen, Keramik und vorbehandelten oder nicht vorbehandelten Metallen verwendet werden.

Die erfindungsgemäßen Dispersionen sind auch hervorragend für die Einschichtlackierung geeignet. Die haftende Überzugsschicht kann als solche unverändert bleiben, sie kann aber auch als Zwischenschicht, also als Unterlage für weitere Beschichtungen, dienen, die wiederum aus demselben oder einem anderen üblichen Beschichtungsmaterial bestehen können.

Aus Epoxid-Polyacrylat-Dispersionen können bei geeigneter Wahl der Monomeren (C-2) und gegebenenfalls der Reaktivverdünner (C-1) und/oder Lösemittel (D) matte Klarlacke hergestellt werden, deren sonstiges Eigenschaftsbild unverändert gut ist (gute Haftung auf den verschiedensten Untergründen, sehr hohe Härte, gute Beständigkeiten usw.).

Wegen ihrer guten Verdünnbarkeit und ihrer günstigen Eigenschaften eignen sich die erfindungsgemäßen Dispersionen auch zur zusätzlichen Verwendung in der Elektrotauchlackierung.

Eine weitere Möglichkeit ist die Verwendung der erfindungsgemäßen Dispersionen zur Herstellung wasserverdünnbarer Klebstoffe. Auch als Bindemittel für textile, organische und/oder anorganische Materialien sind diese einsetzbar. Ferner können sie auch als Zusatz zu Kunststoffzementen dienen.

Im Falle des Einsatzes als Beschichtungsmittel bzw. als überwiegend wäßriger Lack erfolgt die Applikation auf das Substrat nach herkömmlichen Methoden, wie beispielsweise Streichen, Spritzen, Tauchen oder Aufwalzen. Die Beschichtungen werden, sofern keine Härtungsmittel (II) für die Kalthärtung mitverwendet werden, durch Erhitzen auf 80 bis 250 °C für eine zum Aushärten ausreichende Zeit, im allgemeinen 5 bis 60 Minuten, gehärtet.

Gegebenenfalls benötigte Additive gemäß (III) sowie - falls für den beabsichtigten Einsatz gewünscht - weitere Härtungsmittel (II) werden in solchen Mengen zugesetzt, wie sie für den entsprechenden Zweck benötigt und dem Fachmann bekannt sind. In diesem Fall bleibt dem Anwender überlassen, welchen Festkörper und Lösemittelgehalt er wählt.

Alle Angaben von Gehalten, prozentualen Gehalten und Anteilen sind Massenanteile, soweit nicht anders gekennzeichnet.

### Beispiele

### 1. Herstellung der Emulgatoren (A-4)

### 1.1 Allgemeine Arbeitsvorschrift

Polyäthylenglykole mit verschiedener molarer Masse M_{w} werden mit Beckopox® EP 140 (Bisphenol A-Diglycidyläther, Epoxidgruppengehalt 5400 mmol/kg (EV-Wert 185 g/mol)), bei 125 °C homogenisiert, mit 0,2 % Anchor® 1040 (BF₃-Amin-Komplex, Air Products) versetzt und bei langsam steigender Temperatur solange gehalten, bis der angestrebte Epoxidgruppengehalt E erreicht ist. Durch zügiges Kühlen unter 100°C wird die Reaktion gestoppt.

### 1.2 Beispiele von Emulgatoren (A-4)

Emulgatoren gemäß folgender Tabelle wurden hergestellt:

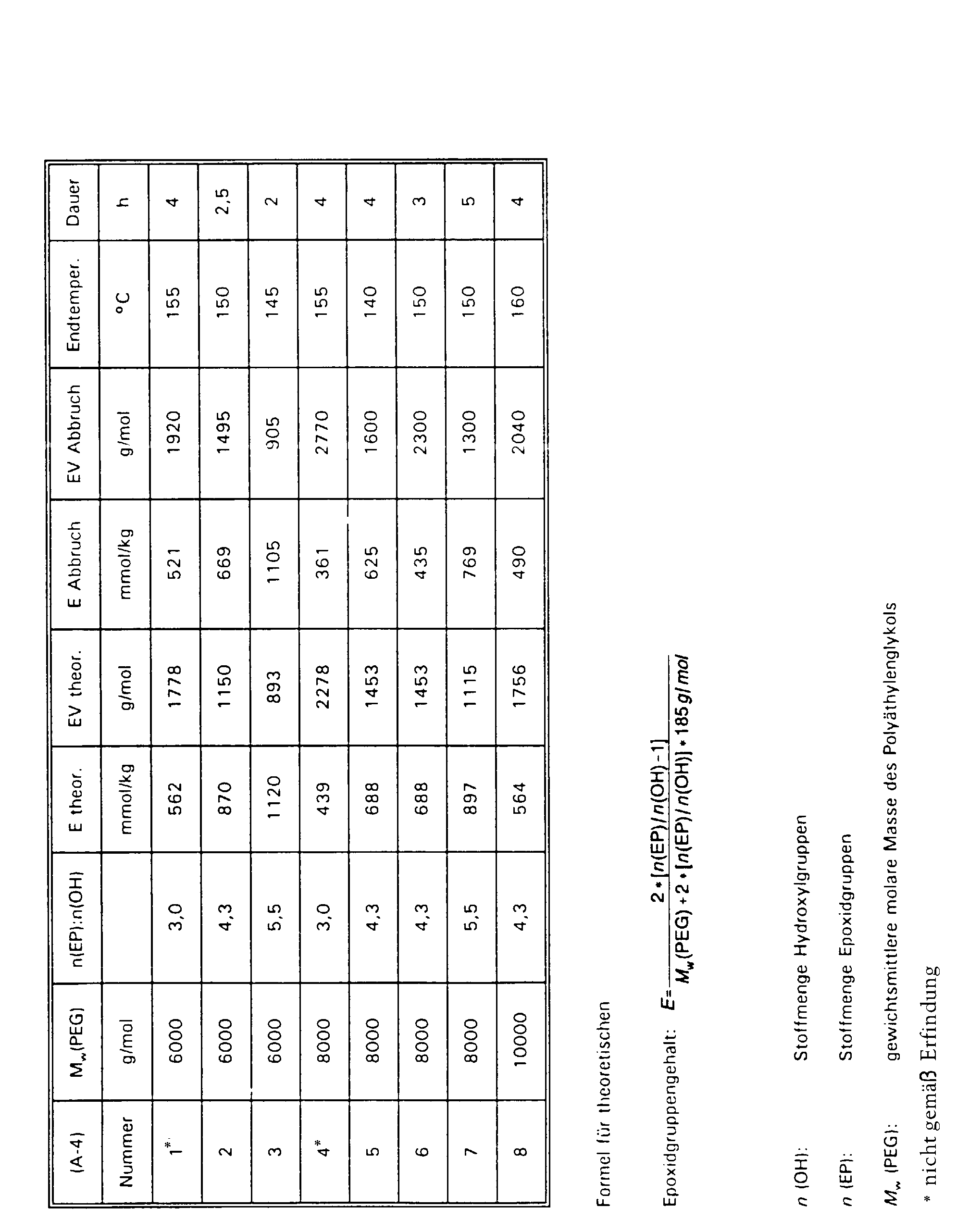

### 2. Selbstemulgierende Basisharze (A) vom Typ 1, 12 % Emulgator

### 2.1 Allgemeine Arbeitsvorschrift

58 g der entsprechenden Verbindung (A-4) werden mit 98 g Bisphenol A und 325 g Beckopox® EP 140 vorgelegt. Man heizt auf 125 °C und startet die Reaktion durch Zufügen von 0,4 g Shell Catalyst® 1201. Durch Exothermie steigt die Temperatur auf ca. 160 °C. Man hält bei dieser Temperatur solange, bis der Endgehalt der Epoxidgruppen erreicht ist.

### 2.2 Beispiele von selbstemulgierenden Basisharzen (A) vom Typ 1

Basisharze gemäß folgender Tabelle wurden hergestellt:

| **(A)** | **Emulgator** | **E** | **EV-Wert** |
|---|---|---|---|
| Nummer | (A-4) | mmol/kg | g/mol |
| 1 | 1 | 1898 | 527 |
| 2 | 2 | 1942 | 515 |
| 3 | 3 | 1965 | 509 |
| 4 | 4 | 1894 | 528 |
| 5 | 5 | 1953 | 512 |
| 6 | 6 | 1905 | 525 |
| 7 | 7 | 1980 | 505 |
| 8 | 8 | 1898 | 527 |

### 3. Dispersionen (I) vom Typ 1, für kalthärtende Beschichtungen

Die Dispersionen dieser Serie sollen die technische Überlegenheit gegenüber Systemen gemäß der Patentschrift EP 272 595 belegen. Aus diesem Grunde werden diese ohne reaktive Verdünner (C), aber mit Lösemittel (D) gefertigt. Vergleichsbeispiel ist die Dispersion Beckopox® EP 384w (Hoechst AG), welche 3 % Benzylalkohol (BZA) und 7 % Methoxypropanol (MOP) als Lösemittel (D) enthält.

### 3.1 Allgemeine Arbeitsvorschrift

Das Basisharz wird bei 100 °C mit 20 Gew.-% einer Mischung von 3 Teilen BZA und 7 Teilen MOP homogenisiert und dann unter gutem Rühren durch langsames, portionsweises Finrühren von Wasser dispergiert. Das Dispergierverfahren orientiert sich an der Beschreibung in der Anmeldung DE-A 41 28 487.

### 3.2 Beispiele von Dispersionen (I) vom Typ 1, für kalthärtende Beschichtungen

Dispersionen gemäß folgender Tabelle wurden mit MOP als Lösemittel hergestellt:

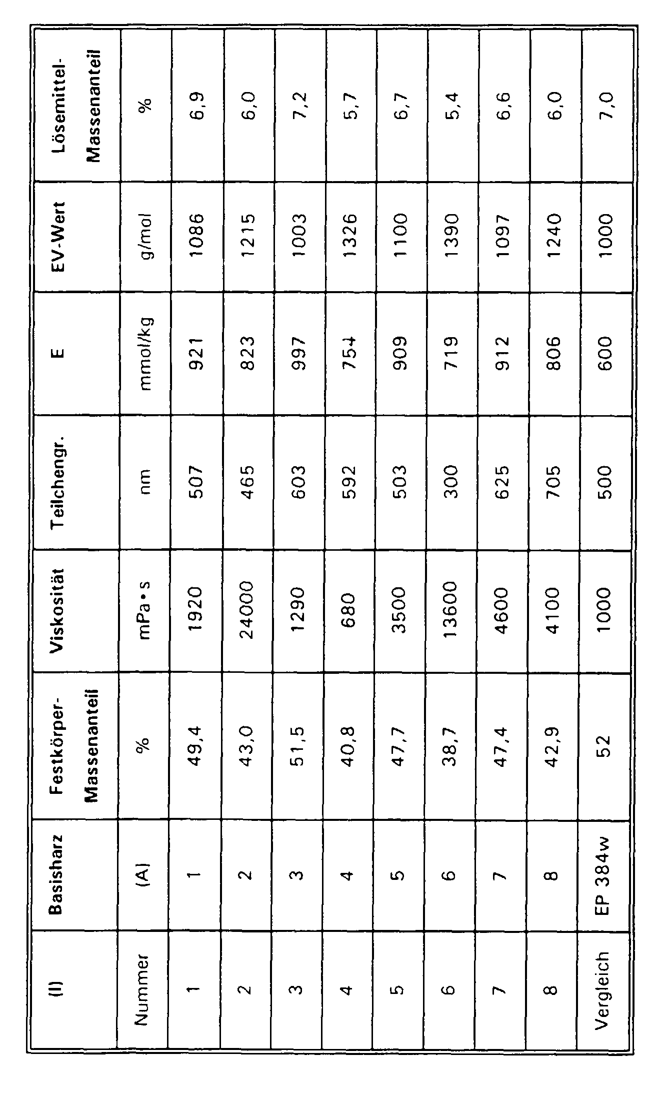

### 4. Anwendungstechnische Prüfung der unter 3.1 erhaltenen Dispersionen

### 4.1 Klarlackprüfung

Die Prüfung erfolgt gegen den Vergleich EP 384w mit dem auf 40 % verdünnten Härter Beckopox® VEH 2133w (Hoechst AG). Es werden jeweils 100 g Dispersion eingesetzt. Die Härtung erfolgt bei 21 °C und 34 % relativer Luftfeuchte.

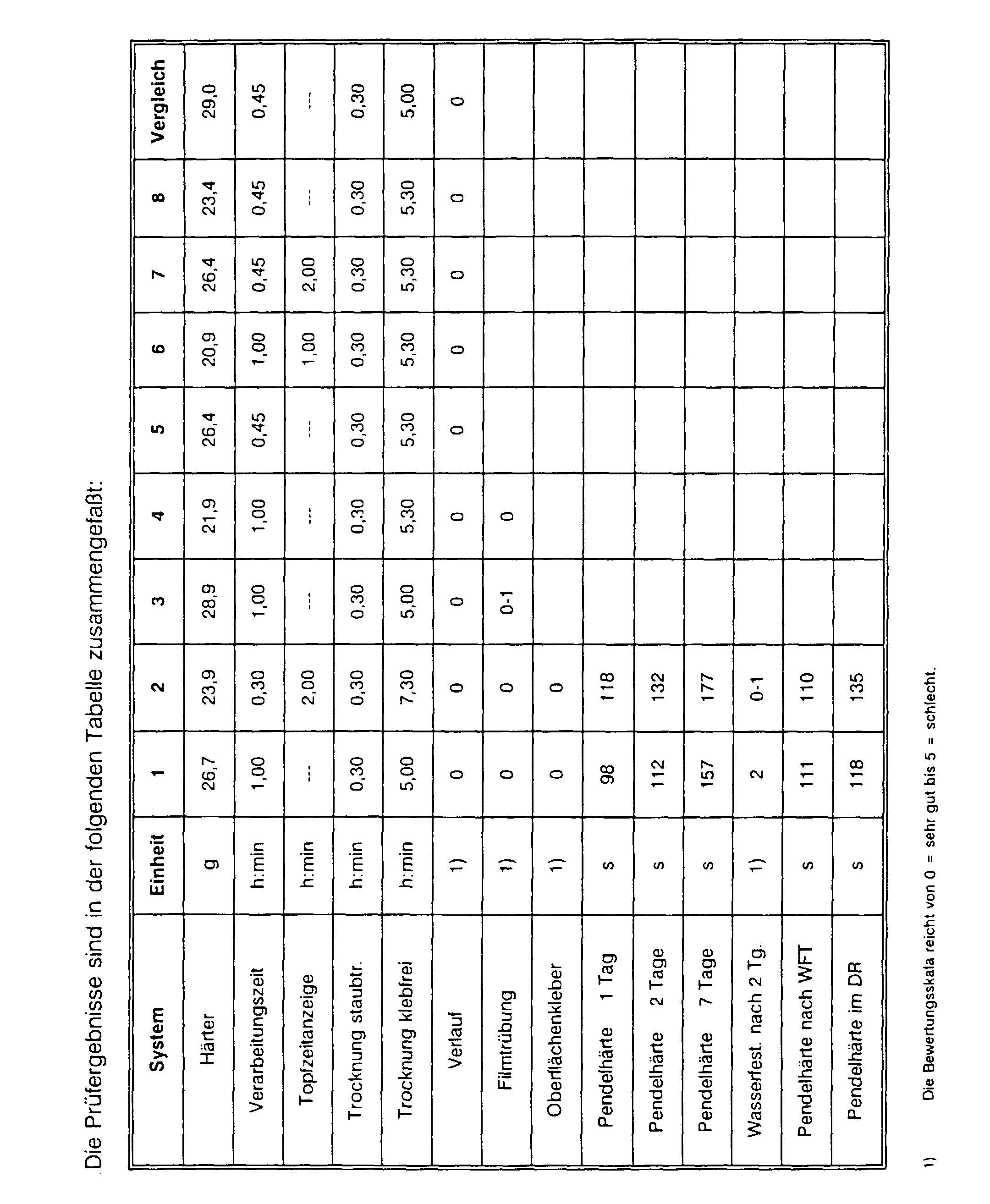

- WFT:: Wasserfestigkeitstest
- Pendelhärte nach WFT:: die Pendelhärte wurde an dem eingetauchten Teil des Prüfkörpers ermittelt, nachdem dieser 1 Tag getrocknet wurde
- Pendelhärte im DR:: die Pendelhärte wurde an dem Teil des Prüfkörpers ermittelt, der im Dampfraum oberhalb des eingetauchten Teils beim Wasserfestigkeitstest war, nach 1 Tag Trocknung
Erläuterung der Prüfungsbedingungen:
1. Staubtrocken: Auf den Film gestreute Glasperlen lassen sich nach der Aushärtung nicht mehr mit einem Pinsel entfernen.
2. Klebfrei: Die Glasperlen lassen sich nach der Aushärtung mit einem Pinsel entfernen.
3. Topfzeit: Nach dem Mischen von Härter und Dispersion werden halbstündlich Filme mit einer Naßfilmdicke von 200 µm aufgezogen. Das Auftreten einer Trübung im Film nach Aushärtung zeigt das Ende der Verarbeitungszeit an und wird als Prüfergebnis eingetragen.
4. Härte: Pendelhärte nach König, DIN 53 157.
5. Wasserfestigkeit nach 24 h, Lagerung bei Raumtemperatur: Auf Glasplatten mit 200 µm Naßfilmdicke aufgezogene Filme werden nach 24 h Lagerung in Wasser bei Raumtemperatur geprüft.

### 4.2 Prüfung als Korrosionsschutzlack mit Pigmentierung der Dispersion

Die o.g. Systeme wurden mit einer vorläufigen, noch nicht für die Pigmentierung von festharzdispersionen optimierten Korrosionsschutzformulierung, gemäß folgender tabelle einem ersten screening unterzogen, wobei jeweils 100 g Dispersion eingesetzt wurden:

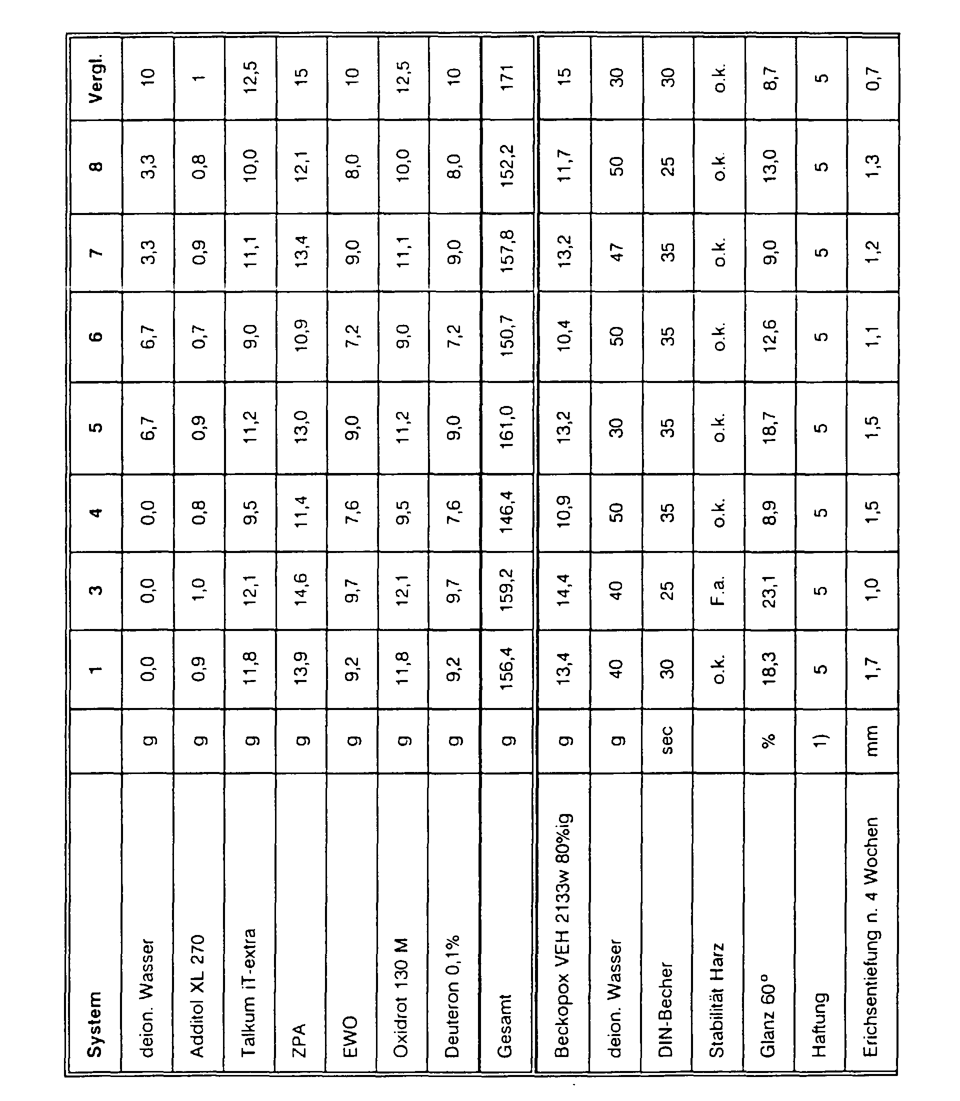

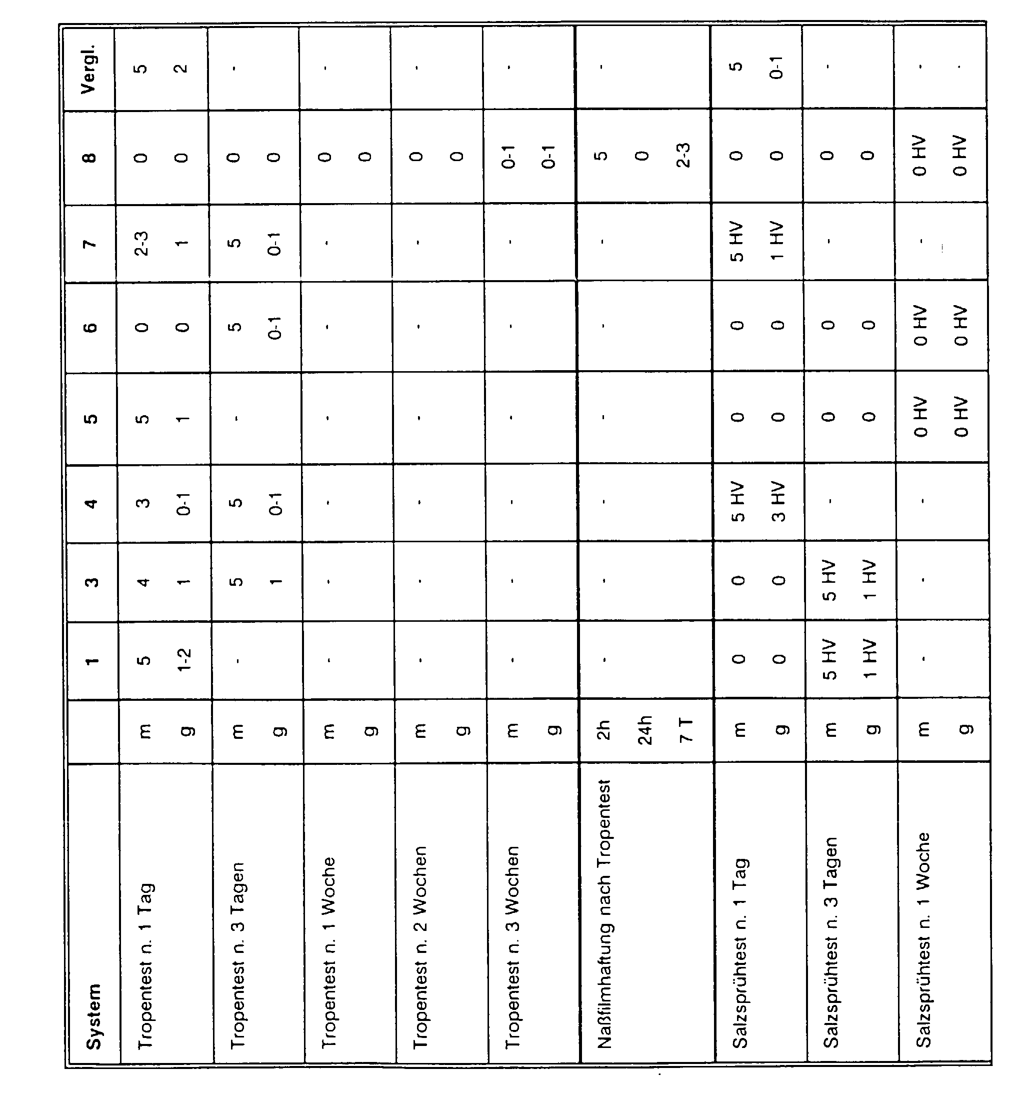

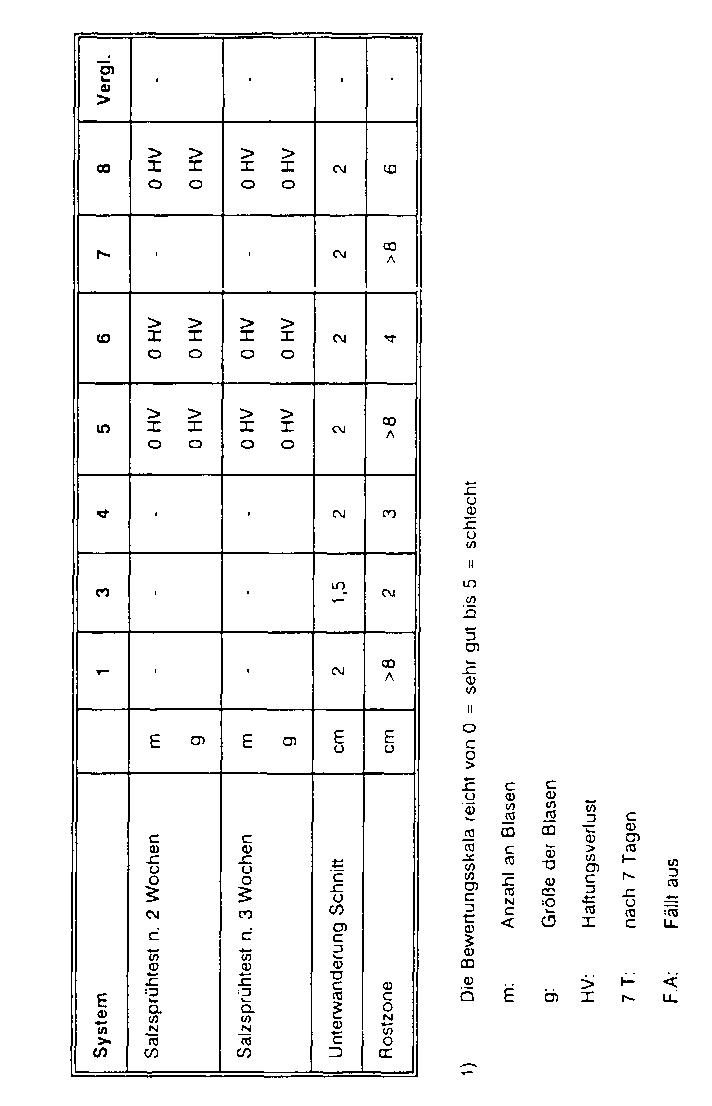

Hierbei erweist sich System Nr. 8 als am besten geeignet - der Vorteil gegenüber Beckopox EP 384w (Vergl) ist deutlich erkennbar. Die ungenügende Haftung sämtlicher Systeme inkl. Vergleich läßt sich durch Verwendung anderer, besser geeigneter Additive erheblich verbessern.

Auffällig ist, daß Systeme, welche Emulgatoren mit hochmolekularem Polyethylenglykol enthalten, den mit Abstand besten Korrosionsschutz bieten.

## Patentansprüche

1. Selbstemulgierendes Epoxidharz (A) herstellbar aus Massenanteilen von
(A-1) 50 bis 95 % einer oder mehrerer Epoxidverbindung(en) mit mindestens zwei Epoxidgruppen pro Molekül und einem Epoxidgruppengehalt von 300 bis 11 200 mmol/kg,
(A-2) 5 bis 50 % eines aromatischen Polyols,
(A-3) 0 bis 25 % modifizierender Verbindungen mit mindestens zwei epoxid-reaktiven Gruppen,
(A-4) 5 bis 25 % eines als Emulgator wirkenden Kondensationsproduktes aus
(A-4-a) einem aliphatischen Polyol mit einer gewichtsmittleren molaren Masse M_{w} von 200 bis 20000 g/mol und
(A-4-b) einer Epoxidverbindung mit mindestens zwei Epoxidgruppen pro Molekül und einem Epoxidgruppengehalt von 500 bis 10 000 mmol/kg,
wobei das Verhältnis der Anzahl der OH-Gruppen zur Anzahl der EP-Gruppen 1:4 bis 1:10 und der Epoxidgruppengehalt dieser Kondensationsprodukte (A-4) zwischen 100 und 6700 mmol/kg beträgt.

2. Selbstemulgierendes Epoxidharz (A) nach Anspruch 1, dadurch gekennzeichnet, daß zu seiner Herstellung Massenanteile von 55 bis 85 % der Epoxid-komponente (A-1), 15 bis 45 % der aromatischen Polyolkomponente (A-2), 1 bis 10 % der modifizierenden Verbindungen (A-3) und 10 bis 20 % des Emulgators (A-4) eingesetzt werden.

3. Selbstemulgierendes Epoxidharz (A) nach Anspruch 1, dadurch gekennzeichnet, daß sein Epoxidgruppengehalt 50 bis 2500 mmol/kg beträgt.

4. Selbstemulgierendes Epoxidharz nach Anspruch 1, dadurch gekennzeichnet, daß die Polyepoxide gemäß (A-1) und (A-4-b) im Mittel mehr als zwei Epoxidgruppen pro Molekül tragen.

5. Selbstemulgierendes Epoxidharz nach Anspruch 1, dadurch gekennzeichnet, daß die Polyepoxide gemäß (A-1) und (A-4-b) einen Epoxidgruppengehalt von 500 bis 10 000 mmol/kg aufweisen und ausgewählt sind aus der Gruppe bestehend aus Polyglycidyläthern von mehrwertigen Alkoholen, Phenolen, deren Hydrierungsprodukten und Novolaken, und Polyglycidylestern von Polycarbonsäuren.

6. Selbstemulgierendes Epoxidharz nach Anspruch 1, dadurch gekennzeichnet, daß die aromatischen Polyole (A-2) ausgewählt sind aus zwei- und mehrwertigen Phenolen, Halogenphenolen und Novolaken.

7. Selbstemulgierendes Epoxidharz nach Anspruch 1, dadurch gekennzeichnet, daß die Verbindungen (A3) mindestens zwei funktionelle Gruppen ausgewählt aus Hydroxyl-, Carboxyl-, Carbonsäureanhydrid-, Amino- und Mercaptogruppen aufweisen, die zur Reaktion mit Epoxidgruppen befähigt sind, und von den aromatischen Polyolen (A-2) verschieden sind.

8. Selbstemulgierendes Epoxidharz nach Anspruch 1, dadurch gekennzeichnet, daß die Polyole (A4-a) ausgewählt sind aus der Gruppe der hydrophilen Polyätherpolyole und hydrophilen Polyesterpolyole mit gewichtsmittleren molaren Massen von 600 bis 12 000 g/mol, wobei die Polyätherpolyole Polyoxyalkylenglykole mit 2 bis 4 Kohlenstoffatomen je Alkylengruppe sind, und die Polyoxyalkylenglykole einheitliche Alkylenreste oder Mischungen aus mindestens zwei verschiedenen Alkylenresten enthalten, und die Polyesterpolyole durch Polykondensation von einem molaren Überschuß an aliphatischen Diolen mit 2 bis 12 Kohlenstoffatomen mit Dicarbonsäuren mit 2 bis 40 Kohlenstoffatomen ausgewählt aus aliphatischen, cycloaliphatischen und aromatischen Dicarbonsäuren unter Mitverwendung von hydrophilen oligomeren oder polymeren Polyoxyalkylenglykolen hergestellt werden können.

9. Selbstemulgierendes Epoxidharz nach Anspruch 1, dadurch gekennzeichnet, daß die Polyoie (A4-a) hydrophile Polyole mit gewichtsmittleren molaren Massen von 600 bis 12 000 g/mol sind, wobei die Polyole ausgewählt sind aus Polyester-Polyolen, Polyacrylatpolyolen, Polycarbonat-Polyolen und Polyurethan-Polyolen, die einen Gehalt von 10 bis 5000 mmol/kg an funktionellen Gruppen aufweisen, die in Wasser Ionen bilden können.

10. Selbstemulgierendes Epoxidharz nach Anspruch 1, dadurch gekennzeichnet, daß die Polyole (A4-a) ausgewählt sind aus der Gruppe der aliphatischen Polyätherpolyole mit einem Massenanteil von mindestens 20 % an Oxyäthylengruppen in den Oxyalkylengruppen.

11. Stabile, wäßrige Epoxidharz-Dispersion (I), enthaltend Massenanteile von
(A) 30 bis 90 % eines Epoxidharzes nach Anspruch 1,
(B) 0 bis 20 % Tenside,
(C) 0 bis 20 % reaktives Verdünnungsmittel, ausgewählt aus einer oder mehreren der folgenden Verbindungen aus der Gruppe der
(C-1) flüssigen epoxyfunktionellen Verbindungen mit einer molaren Masse unter 1000 g/mol, und zur radikalischen Polymerisation bzw. Copolymerisation befähigten äthylenisch ungesättigten, ansonsten inerten oder gegebenenfalls funktionellen Monomeren (C-2);
(D) 0 bis 25 % inerte organische Lösemittel;
(E) 5 bis 70 % Wasser,
wobei die Summe der Massenanteile stets 100 % beträgt.

12. Stabile, wäßrige Epoxidharz-Dispersion nach Anspruch 11, dadurch gekennzeichnet, daß ihr Feststoff-Massenanteil zwischen 30 und 90 % liegt.

13. Für Raumtemperaturhärtung geeignete Epoxidharzdispersion nach Anspruch 11, dadurch gekennzeichnet, daß der Epoxidgruppengehalt des Epoxidharzes (A) zwischen 1000 und 2500 mmol/kg beträgt.

14. Für Heißhärtung geeignete Epoxidharzdispersion nach Anspruch 11, dadurch gekennzeichnet, daß der Epoxidgruppengehalt des Epoxidharzes (A) zwischen 50 und weniger als 1700 mmol/kg beträgt.

15. Wäßrige Epoxidharzdispersion nach Anspruch 11, dadurch gekennzeichnet, daß die äthylenisch ungesättigten Monomere (C-2) einen Massenanteil von 2,5 bis 25 % an glycidylgruppenhaltigen Monomeren enthalten.

16. Wäßrige Epoxidharzdispersion nach Anspruch 11, dadurch gekennzeichnet, daß die Verbindungen (C-1) mit einer molaren Masse unter 1000 g/mol ausgewählt sind aus Mono- und Diglycidyläthern von aliphatischen und aromatischen Hydroxylverbindungen, aus Diglycidyläthern von Polyoxyalkylenglykolen, und aus Mono- und Diglycidylestern von aliphatischen verzweigten oder unverzweigten Mono- und Dicarbonsäuren mit 2 bis 40 Kohlenstoffatomen.

17. Verwendung von epoxidgruppenhaltigen Kondensationsprodukten (A-4) herstellbar aus
(A-4-a) einem aliphatischen Polyol mit einer gewichtsmittleren molaren Masse M_{w} von 200 bis 20000 g/mol und
(A-4-b) einer Epoxidverbindung mit mindestens zwei Epoxidgruppen pro Molekül und einem Epoxidgruppengehalt von 500 bis 10 000 mmol/kg,
wobei das Verhältnis der Anzahl der OH-Gruppen zur Anzahl der EP-Gruppen 1:4 bis 1:10 und der Epoxidgruppengehalt dieser Kondensationsprodukte (A-4) zwischen 100 und 6700 mmol/kg beträgt, als Emulgator für Epoxidharze zur Herstellung von wäßrigen Dispersionen.

18. Verfahren zur Herstellung einer wäßrigen Epoxidharzdispersion nach Anspruch 11, dadurch gekennzeichnet, daß im ersten Schritt der Emulgator (A-4) hergestellt wird, im zweiten Schritt das Epoxidharz (A) in Gegenwart des Emulgators (A-4) durch Kondensation der Komponenten (A-1), (A-2) und (A-3) bei erhöhten Temperaturen von 100 bis 220 °C in Gegenwart von Kondensationskatalysatoren ausgewählt aus der Gruppe der Verbindungen organische Phosphine, organische Phosphoniumsalze, organische Amine, organische Ammoniumsalze, der Lewis-Säuren und Lewis-Basen hergestellt wird, im dritten Schritt bei einer Temperatur von 60 bis 200 °C ein reaktives Verdünnungsmittel (C-1) zugefügt wird, im vierten Schritt Dispergiermittel (B) und Lösungsmittel (D) zugesetzt und einhomogenisiert werden, und schließlich im fünften Schritt Wasser portionsweise in mindestens zwei Portionen zugegeben wird.

19. Verfahren zur Herstellung einer acrylatmodifizierten wäßrigen Epoxidharz-dispersion nach Anspruch 11, dadurch gekennzeichnet, daß im ersten Schritt der Emulgator (A-4) hergestellt wird, im zweiten Schritt das Epoxidharz (A) in Gegenwart des Emulgators (A-4) durch Kondensation der Komponenten (A-1), (A-2) und (A-3) bei erhöhten Temperaturen von 100 bis 220 °C in Gegenwart von Kondensationskatalysatoren ausgewählt aus der Gruppe der Verbindungen organische Phosphine, organische Phosphoniumsalze, organische Amine, organische Ammoniumsalze, der Lewis-Säuren und Lewis-Basen hergestellt wird, im dritten Schritt bei einer Temperatur von 60 bis 200 °C ein Verdünnungsmittel (C) zugefügt wird, das mindestens einen Massenanteil von 10 % eines zur radikalischen Polymerisation fähigen Monomeren (C-2) enthält, im vierten Schritt Dispergiermittel (B) und Lösungsmittel (D) zugesetzt und einhomogenisiert werden, im fünften Schritt Wasser portionsweise in mindestens zwei Portionen zugegeben wird, und schließlich im sechsten Schritt nach Zugabe eines radikalischen Initiatorsystems die Monomeren (C-2) in einer Emulsionspolymerisation polymerisiert werden.

20. Verfahren nach Anspruch 19, dadurch gekennzeichnet, daß das Massenverhältnis von Epoxidharz zu Additionspolymerem aus der Polymerisation der Verbindungen (C-2) zwischen 100 zu 1 und 20 zu 80 liegt.

21. Wäßrige Beschichtungsmittel enthaltend Massenanteile von
(I) 40 bis 90 % einer wäßrigen Epoxidharzdispersion nach Anspruch 11,
(II) 10 bis 60 % eines wäßrigen Härtungsmittels, und
(III) 0 bis 20 % übliche Additive, Füllstoffe, Pigmente und Katalysatoren.

22. Verwendung der wäßrigen Beschichtungsmittel nach Anspruch 21 zur Herstellung von Beschichtungen auf Holz, mineralischen Untergründen, Keramik, Metallen, Glas, Kunststoffen, Kompositwerkstoffen und Geweben.

23. Verwendung der wäßrigen Beschichtungsmittel nach Anspruch 21 als Klebstoffe.

24. Verwendung der wäßrigen Beschichtungsmittel nach Anspruch 21 als Korrosionsschutzbeschichtung auf metallischen Untergründen.

## Claims

1. A self-emulsifying epoxy resin (A) which can be prepared from mass fractions of
(A-1) from 50 to 95% of one or more epoxide compounds having at least two epoxide groups per molecule and an epoxide group content of from 300 to 11,200 mmol/kg,
(A-2) from 5 to 50% of an aromatic polyol,
(A-3) from 0 to 25% of modifying compounds having at least two epoxide-reactive groups,
(A-4) from 5 to 25% of an emulsifying product of the condensation of
(A-4-a) an aliphatic polyol having a weight-average molar mass M_{w} of from 200 to 20,000 g/mol and
(A-4-b) an epoxide compound having at least two epoxide groups per molecule and an epoxide group content of from 500 to 10,000 mmol/kg,
the ratio of the number of OH groups to the number of EP groups being from 1:4 to 1:10 and the epoxide group content of these condensation products (A-4) being between 100 and 6700 mmol/kg.

2. A self-emulsifying epoxy resin (A) as claimed in claim 1, which is prepared using mass fractions of from 55 to 85% of the epoxide component (A-1), from 15 to 45% of the aromatic polyol component (A-2), from 1 to 10% of the modifying compounds (A-3) and from 10 to 20% of the emulsifier (A-4).

3. A self-emulsifying epoxy resin (A) as claimed in claim 1, whose epoxide group content is from 50 to 2500 mmol/kg.

4. A self-emulsifying epoxy resin as claimed in claim 1, wherein the polyepoxides according to (A-1) and (A-4-b) carry on average more than two epoxide groups per molecule.

5. A self-emulsifying epoxy resin as claimed in claim 1, wherein the polyepoxides according to (A-1) and (A-4-b) have an epoxide group content of from 500 to 10,000 mmol/kg and are selected from the group consisting of polyglycidyl ethers of polyhydric alcohols, phenols, their hydrogenation products and novolaks, and polyglycidyl esters of polycarboxylic acids.

6. A self-emulsifying epoxy resin as claimed in claim 1, wherein the aromatic polyols (A-2) are selected from di- and polyhydric phenols, halophenols and novolaks.

7. A self-emulsifying epoxy resin as claimed in claim 1, wherein the compounds (A3) have at least two functional groups selected from hydroxyl, carboxyl, carboxylic anhydride, amino and mercapto groups which are capable of reaction with epoxide groups, and are different from the aromatic polyols (A-2).

8. A self-emulsifying epoxy resin as claimed in claim 1, wherein the polyols (A-4-a) are selected from the group consisting of hydrophilic polyether-polyols and hydrophilic polyester-polyols having weight-average molar masses of from 600 to 12,000 g/mol, the polyether-polyols being polyoxyalkylene glycols having 2 to 4 carbon atoms per alkylene group, and the polyoxyalkylene glycols comprise uniform alkylene radicals or mixtures of at least two different alkylene radicals, and the polyester-polyols can be prepared by polycondensation of a molar excess of aliphatic diols having 2 to 12 carbon atoms with dicarboxylic acids having 2 to 40 carbon atoms which are selected from aliphatic, cycloaliphatic and aromatic dicarboxylic acids, with the use of hydrophilic oligomeric or polymeric polyoxyalkylene glycols.

9. A self-emulsifying epoxy resin as claimed in claim 1, wherein the polyols (A-4-a) are hydrophilic polyols having weight-average molar masses of from 600 to 12,000 g/mol, the polyols being selected from polyester-polyols, polyacrylate-polyols, polycarbonate-polyols and polyurethane-polyols which have a content of from 10 to 5000 mmol/kg of functional groups which are able to form ions in water.

10. A self-emulsifying epoxy resin as claimed in claim 1, wherein the polyols (A-4-a) are selected from the group consisting of the aliphatic polyether-polyols with a mass fraction of at least 20% of oxyethylene groups in the oxyalkylene groups.

11. A stable aqueous epoxy resin dispersion (I) comprising mass fractions of
(A) from 30 to 90% of an epoxy resin as claimed in claim 1,
(B) from 0 to 20% of surfactants,
(C) from 0 to 20% of a reactive diluent selected from one or more of the following compounds from the group of
(C-1) liquid epoxy-functional compounds having a molar mass of below 1000 g/mol, and ethylenically unsaturated, otherwise inert or, if desired, functional monomers (C-2) which are capable of free-radical polymerization or copolymerization;
(D) from 0 to 25% of inert organic solvents, and
(E) from 5 to 70% of water,
the sum of the mass fractions always being 100%.

12. A stable aqueous epoxy resin dispersion as claimed in claim 11, whose solids content by mass is between 30 and 90%.

13. An epoxy resin dispersion as claimed in claim 11 which is suitable for curing at room temperature, wherein the epoxide group content of the epoxy resin (A) is between 1000 and 2500 mmol/kg.

14. An epoxy resin dispersion as claimed in claim 11 which is suitable for heat curing, wherein the epoxide group content of the epoxy resin (A) is between 50 and less than 1700 mmol/kg.

15. An aqueous epoxy resin dispersion as claimed in claim 11, wherein the ethylenically unsaturated monomers (C-2) comprise a mass fraction of from 2.5 to 25% of monomers which contain glycidyl groups.

16. An aqueous epoxy resin dispersion as claimed in claim 11, wherein the compounds (C-1) having a molar mass of below 1000 g/mol are selected from mono- and diglycidyl ethers of aliphatic and aromatic hydroxyl compounds, from diglycidyl ethers of polyoxyalkylene glycols, and from mono- and diglycidyl esters of aliphatic, linear or branched mono- and dicarboxylic acids having 2 to 40 carbon atoms.

17. The use of a condensation product (A-4) which contains epoxide groups and can be prepared from
(A-4-a) an aliphatic polyol having a weight-average molar mass M_{w} of from 200 to 20,000 g/mol, and
(A-4-b) an epoxide compound having at least two epoxide groups per molecule and an epoxide group content of from 500 to 10,000 mmol/kg,
the ratio of the number of OH groups to the number of EP groups being from 1:4 to 1:10 and the epoxide group content of this condensation product (A-4) being between 100 and 6700 mmol/kg, as an emulsifier for epoxy resins for the preparation of aqueous dispersions.

18. A process for the preparation of an aqueous epoxy resin dispersion as claimed in claim 11, which comprises in the first step preparing the emulsifier (A-4), in the second step preparing the epoxy resin (A) in the presence of the emulsifier (A-4) by condensation of components (A-1), (A-2) and (A-3) at elevated temperatures of from 100 to 220°C in the presence of condensation catalysts selected from the group consisting of the compounds organic phosphines, organic phosphonium salts, organic amines, organic ammonium salts, Lewis acids and Lewis bases, in the third step adding a reactive diluent (C-1) at a temperature of from 60 to 200°C, in the fourth step adding dispersant (B) and solvent (D) and incorporating them homogeneously, and finally, in the fifth step, adding water in - at least two - portions.

19. A process for the preparation of an acrylate-modified aqueous epoxy resin dispersion as claimed in claim 11, which comprises in the first step preparing the emulsifier (A-4), in the second step preparing the epoxy resin (A) in the presence of the emulsifier (A-4) by condensation of components (A-1), (A-2) and (A-3) at elevated temperatures of from 100 to 220°C in the presence of condensation catalysts selected from the group consisting of the compounds organic phosphines, organic phosphonium salts, organic amines, organic ammonium salts, Lewis acids and Lewis bases, in the third step adding, at a temperature of from 60 to 200°C, a diluent (C) which contains at least a mass fraction of 10% of a monomer (C-2) which is capable of free-radical polymerization, in the fourth step adding dispersant (B) and solvent (D) and incorporating them homogeneously, in the fifth step adding water in - at least two - portions, and finally, in the sixth step, after adding a free-radical initiator system, polymerizing the monomers (C-2) in an emulsion polymerization.

20. The process as claimed in claim 19, wherein the ratio by mass of epoxy resin to addition polymers from the polymerization of the compounds (C-2) is between 100:1 and 20:80.

21. An aqueous coating composition comprising mass fractions of
(I) from 40 to 90% of an aqueous epoxy resin dispersion as claimed in claim 11,
(II) from 10 to 60% of an aqueous curing agent, and
(III) from 0 to 20% of customary additives, fillers, pigments and catalysts.

22. The use of an aqueous coating composition as claimed in claim 21 to produce coatings on wood, mineral substrates, ceramic, metals, glass, plastics, composite materials and woven fabrics.

23. The use of an aqueous coating composition as claimed in claim 21 as an adhesive.

24. The use of an aqueous coating composition as claimed in claim 21 as an anticorrosion coating on metallic substrates.

## Revendications

1. Résine époxyde auto-émulsifiable (A) pouvant être produite à partir des proportions en masse de
(A-1) 50 à 95 % d'un ou plusieurs composé(s) époxyde(s) ayant au moins deux groupes époxydes par molécule et une teneur en groupes époxydes de 300 à 11 200 mmol/kg ;
(A-2) 5 à 50 % d'un polyol aromatique ; et
(A-3) 0 à 25 % de composés modifiants ayant au moins deux groupes réagissant avec l'époxyde ;
(A-4) 5 à 25 % d'un produit de condensation agissant comme un agent émulsifiant et composé de :
(A-4-a) un polyol aliphatique avec une moyenne pondérée de sa masse molaire M_{w} de 200 à 20 000 g/mol ; et
(A-4-b) un composé époxyde ayant au moins deux groupes époxydes par molécule et une teneur en groupes époxydes de 500 à 10 000 mmol/kg,
le rapport du nombre de groupes OH sur le nombre de groupes EP allant de 1:4 à 1:10 et la teneur en groupes époxydes de ces produits de condensation allant de 100 à 6 700 mmol/kg.

2. Résine époxyde auto-émulsifiable (A) selon la revendication 1, caractérisée en ce que l'on utilise pour la préparer des proportions en masse de 55 à 85 % du composant époxyde (A-1), 15 à 45 % du composant polyol aromatique (A-2), 1 à 10 % des composés modifiants (A-3) et 10 à 20 % de l'agent émulsifiant (A-4).

3. Résine époxyde auto-émulsifiable (A) selon la revendication 1, caractérisée en ce que sa teneur en groupes époxydes est de 50 à 2 500 mmol/kg.

4. Résine époxyde auto-émulsifiable selon la revendication 1, caractérisée en ce que les polyépoxydes suivant (A-1) et (A-4-b) portent en moyenne plus de deux groupes époxydes par molécule.

5. Résine époxyde auto-émulsifiable selon la revendication 1, caractérisée en ce que les polyépoxydes suivant (A-1) et (A-4-b) présentent une teneur en groupes époxydes de 500 à 10 000 mmol/kg et sont choisis dans le groupe composé des éthers polyglycidyliques d'alcools plurivalents, des phénols, des produits d'hydrogénation de ceux-ci et des novolaques, et des esters polyglycidyliques d'acides polycarboxyliques.

6. Résine époxyde auto-émulsifiable selon la revendication 1, caractérisée en ce que les polyols aromatiques (A-2) sont choisis parmi les phénols divalents et plurivalents, les halogénophénols et les novolaques.

7. Résine époxyde auto-émulsifiable selon la revendication 1, caractérisée en ce que les composés (A-3) présentent au moins deux groupes fonctionnels choisis parmi les groupes hydroxyle, carboxyle, anhydride d'acide carboxylique, amino et mercapto qui sont aptes à réagir avec des groupes époxydes et qui sont différents des polyols aromatiques (A-2).

8. Résine époxyde auto-émulsifiable selon la revendication 1, caractérisée en ce que les polyols (A-4-a) sont choisis dans le groupe des polyéther-polyols hydrophiles et des polyester-polyols hydrophiles dont la moyenne pondérée de la masse molaire va de 600 à 12 000 g/mol, les polyéther-polyols étant des polyoxyalkylène glycols ayant de 2 à 4 atomes de carbone par groupe alkylène et les polyoxyalkylène glycols contenant des résidus alkylènes unitaires ou des mélanges d'au moins deux résidus alkylènes différents, et les polyester-polyols pouvant être produits par polycondensation d'un excès molaire de diols aliphatiques ayant de 2 à 12 atomes de carbone avec des acides dicarboxyliques ayant de 2 à 40 atomes de carbone, choisis parmi les acides dicarboxyliques aliphatiques, cycloaliphatiques et aromatiques, avec utilisation conjointe de polyoxyalkylène glycols oligomères ou polymères hydrophiles.

9. Résine époxyde auto-émulsifiable selon la revendication 1, caractérisée en ce que les polyols (A-4-a) sont des polyols hydrophiles dont la moyenne pondérée de la masse molaire va de 600 à 12 000 g/mol, les polyols étant choisis dans le groupe des polyester-polyols, des polyacrylate-polyols, des polycarbonate-polyols et des polyuréthanne-polyols qui présentent une teneur de 10 à 5 000 mmol/kg en groupes fonctionnels capables de former des ions dans l'eau.

10. Résine époxyde auto-émulsifiable selon la revendication 1, caractérisée en ce que les polyols (A-4-a) sont choisis dans le groupe des polyéther-polyols aliphatiques avec une proportion en masse d'au moins 20 % de groupes oxyéthylène dans les groupes oxyalkylène.

11. Dispersion aqueuse stable de résine époxyde (I), contenant les proportions en masse de
(A) 30 à 90 % d'une résine époxyde selon la revendication 1 ;
(B) 0 à 20 % d'agents tensio-actifs ;
(C) 0 à 20 % d'un diluant réactif choisi parmi un ou plusieurs des composés du groupe constitué de
(C-1) composés liquides à fonctionnalité époxyde ayant une masse molaire inférieure à 1 000 g/mol ; et
(C-2) monomères éthyléniquement insaturés aptes à la polymérisation ou copolymérisation radicalaire, par ailleurs inertes ou le cas échéant fonctionnels ;
(D) 0 à 25 % de solvants organiques inertes ;
(E) 5 à 70 % d'eau,
la somme des proportions en masse étant toujours égale à 100 %.

12. Dispersion aqueuse stable de résine époxyde (I) selon la revendication 11, caractérisée en ce que sa proportion en masse de solides est comprise entre 30 et 90 %.

13. Dispersion de résine époxyde selon la revendication 11 convenant pour le durcissement à la température ambiante, caractérisée en ce que la teneur en groupes époxydes de la résine époxyde (A) est comprise entre 1 000 et 2 500 mmol/kg.

14. Dispersion de résine époxyde selon la revendication 11 convenant pour le durcissement à chaud, caractérisée en ce que la teneur en groupes époxydes de la résine époxyde (A) est comprise entre 50 et moins de 1 700 mmol/kg.

15. Dispersion aqueuse de résine époxyde selon la revendication 11, caractérisée en ce que les monomères éthyléniquement insaturés (C-2) contiennent une proportion en masse de 2,5 à 25 % de monomères contenant des groupes glycidyle.

16. Dispersion aqueuse de résine époxyde selon la revendication 11, caractérisée en ce que les composés (C-1) sont choisis avec une masse molaire inférieure à 1 000 g/mol, parmi les éthers mono- et diglycidyliques de composés hydroxyles aliphatiques et aromatiques, les éthers diglycidyliques de polyoxyalkylène glycols et les esters mono- et diglycidyliques d'acides mono- et dicarboxyliques aliphatiques, ramifiés ou non ramifiés, ayant de 2 à 40 atomes de carbone.

17. Utilisation de produits de condensation contenant des groupes époxydes (A-4) pouvant être préparés à partir de
(A-4-a) un polyol aliphatique avec une moyenne pondérée de sa masse molaire M_{w} de 200 à 20 000 g/mol ; et
(A-4-b) un composé époxyde ayant au moins deux groupes époxydes par molécule et une teneur en groupes époxydes de 500 à 10 000 mmol/kg,
le rapport du nombre de groupes OH sur le nombre de groupes EP allant de 1:4 à 1:10 et la teneur en groupes époxydes de ces produits de condensation (A-4) étant comprise entre 100 et 6 700 mmol/kg,
comme agents émulsifiants de résines époxydes pour la préparation de dispersions aqueuses.

18. Procédé de préparation d'une dispersion aqueuse de résine époxyde selon la revendication 11, caractérisé en ce que l'on prépare dans la première étape l'agent émulsifiant (A-4), on prépare dans la deuxième étape la résine époxyde (A) en présence de l'agent émulsifiant (A-4) par condensation des composants (A-1), (A-2) et (A-3) à des températures élevées de 100 à 220°C en présence de catalyseurs de condensation choisis dans le groupe des composés phosphines organiques, sels organiques de phosphonium, amines organiques, sels organiques d'ammonium, acides de Lewis et bases de Lewis, on ajoute dans la troisième étape, à une température de 60 à 200°C, un diluant réactif (C-1), on ajoute dans la quatrième étape et on incorpore de manière homogène de l'agent dispersant (B) et du solvant (D), et enfin on ajoute par portions dans une cinquième étape de l'eau en au moins deux portions.

19. Procédé de préparation d'une dispersion aqueuse de résine époxyde modifiée par de l'acrylate selon la revendication 11, caractérisé en ce que l'on prépare dans la première étape l'agent émulsifiant (A-4), on prépare dans la deuxième étape la résine époxyde (A) en présence de l'agent émulsifiant (A-4) par condensation des composants (A-1), (A-2) et (A-3) à des températures élevées de 100 à 220°C en présence de catalyseurs de condensation choisis dans le groupe des composés phosphines organiques, sels organiques de phosphonium, amines organiques, sels organiques d'ammonium, acides de Lewis et bases de Lewis, on ajoute dans la troisième étape à une température de 60 à 200°C un diluant réactif (C) qui contient au moins une proportion en masse de 10 % d'un monomère (C-2) apte à la polymérisation radicalaire, on ajoute dans la quatrième étape et on incorpore de manière homogène de l'agent dispersant (B) et du solvant (D), on ajoute par portions dans la cinquième étape de l'eau en au moins deux portions, et enfin, dans la sixième étape, après ajout d'un système d'amorceur radicalaire, on polymérise les monomères (C-2) par polymérisation en émulsion.

20. Procédé selon la revendication 19, caractérisé en ce que le rapport en masse de la résine époxyde sur le polymère d'addition résultant de la polymérisation des composés (C-2) est compris entre 100 pour 1 et 20 pour 80.

21. Produit de revêtement aqueux contenant des proportions en masse de
(I) 40 à 90 % d'une dispersion aqueuse de résine époxyde selon la revendication 11,
(II) 10 à 60 % d'un agent durcisseur aqueux, et
(III) 0 à 20 % d'additifs, matières de charge, pigments et catalyseurs usuels.

22. Utilisation du produit de revêtement aqueux selon la revendication 21 pour réaliser des revêtements sur du bois, des supports minéraux, de la céramique, des métaux, du verre, des matières plastiques, des matériaux composites et des tissus.

23. Utilisation du produit de revêtement aqueux selon la revendication 21 comme adhésif.

24. Utilisation du produit de revêtement aqueux selon la revendication 21 comme revêtement de protection contre la corrosion sur des supports métalliques.
